# EUROPEAN PATENT APPLICATION

(11) **EP 4 564 698 A1**
(43) Date of publication of application: **04.06.2025**
(21) Application number: 23851995.3
(22) Date of filing: 11.08.2023
(51) Int. Cl.: H04B 7/06

(54) **QUANTIZATION METHOD AND APPARATUS**

(30) Priority: 12.08.2022 CN 202210971983
(71) Applicant: Huawei Technologies Co., Ltd., Shenzhen, Guangdong 518129 (CN)
(72) Inventor: CHEN, Jiaxuan, Shenzhen, Guangdong 518129 (CN); HANG, Haicun, Shenzhen, Guangdong 518129 (CN)
(74) Representative: Gill Jennings & Every LLP
(86) International application number: PCT/CN2023/112591
(87) International publication number: WO 2024/032775

(57) **Abstract**

This application provides a quantization method, which may be applied to an application scenario in which two devices share a same quantization dictionary. In this method, an idea of dividing to-be-quantized information into a plurality of quantization parts and separately quantizing each quantization part is provided. A representation format of a quantization dictionary is provided. The quantization dictionary may be represented by using a dictionary usage manner and dictionary content. In this representation format, a correspondence is actually established between R quantization parts of the to-be-quantized information and M quantization sub-dictionaries. If a first sub-dictionary in the M quantization sub-dictionaries corresponds to a first quantization part in the R quantization parts, the first sub-dictionary is used to quantize the first quantization part, or is used to dequantize information obtained by quantizing the first quantization part, and each dictionary element in the first sub-dictionary is a candidate of quantization information of the first quantization part. The use of the representation format of the quantization dictionary can reduce overheads of storing the quantization dictionary by the device.

## Description

This application claims priority to Chinese Patent Application No. 202210971983.8, filed with the China National Intellectual Property Administration on August 12, 2022 and entitled "QUANTIZATION METHOD AND APPARATUS", which is incorporated herein by reference in its entirety.

### TECHNICAL FIELD

Embodiments of this application relate to the field of wireless communication technologies, and more specifically, to a quantization method and an apparatus.

### BACKGROUND

In many scenarios in the field of wireless communication technologies, user equipment (user equipment, UE) needs to feed back channel state information (channel state information, CSI) to a base station. Generally, the UE measures a downlink reference signal sent by the base station, estimates a downlink channel matrix based on the received downlink reference signal, and finally generates CSI and feeds back the CSI to the base station. Higher precision of CSI fed back by the UE indicates more abundant information, and more accurate channel information restored by the base station based on the CSI, so that a precoding matrix determined by the base station is more accurate. However, as a scale of an antenna array in a communication system increases, a quantity of antenna ports that can be supported increases. Because a size of a complete channel matrix is in direct proportion to a quantity of antenna ports, in a massive multiple input multiple output (multiple input multiple output, MIMO) system, the UE feeds back a complete channel matrix to the base station through the CSI, which means huge feedback overheads. In a machine learning method, a non-linear feature extraction capability is stronger, and a channel matrix feature can be extracted more effectively. Compared with a conventional CSI feedback solution, the machine learning method can include more channel information in feedback of a same scale, so that an information loss of CSI compression feedback is reduced and channel restoration precision of the base station is improved. Compared with a conventional solution, the machine learning method may use a smaller feedback amount to represent same channel information, and feedback overheads can be further reduced.

In an existing deep learning-based channel information compression feedback mechanism, compressed channel information processing is performed on channel information by using a deep learning-based encoder on a UE side, information obtained through compression processing is quantized and represented by using a quantization dictionary, and an index of the quantization representation in the quantization dictionary is fed back to the base station. The base station stores a same quantization dictionary as the UE. Based on the quantization dictionary, the base station may restore a received index to a quantization representation, and input the quantization representation into deep learning-based decoding processing, to restore channel information.

In the foregoing mechanism, the quantization dictionary is usually large, and consequently, storage overheads on a base station side and the UE side are huge.

### SUMMARY

This application provides a quantization method and an apparatus, to reduce overheads of storing a quantization dictionary.

According to a first aspect, a quantization method is provided. The method is applied to a communication device (for example, a first device in this application), and the method includes:
The first device obtains a first quantization dictionary;
the first device quantizes to-be-quantized information by using the first quantization dictionary, where the first quantization dictionary includes M sub-dictionaries, the M sub-dictionaries are used to quantize R quantization parts of the to-be-quantized information, and both M and R are positive integers greater than 1; or
the first device dequantizes, by using the first quantization dictionary, received information obtained by quantizing R quantization parts, where the first quantization dictionary includes M sub-dictionaries, the M sub-dictionaries are used to dequantize the received information obtained by quantizing the R quantization parts, that is, information obtained through quantization, and both M and R are positive integers greater than 1.

The first quantization dictionary includes a dictionary usage manner and respective dictionary content of the M sub-dictionaries. The dictionary usage manner indicates a correspondence between the M sub-dictionaries and the R quantization parts, a first sub-dictionary in the M sub-dictionaries corresponds to a first quantization part in the R quantization parts, and the first sub-dictionary is used to quantize the first quantization part, or the first sub-dictionary is used to dequantize information obtained by quantizing the first quantization part. Dictionary content of each sub-dictionary in the M sub-dictionaries includes at least one dictionary element, and each dictionary element included in the first sub-dictionary in the M sub-dictionaries is a candidate of quantization information of the first quantization part.

In this technical solution, an idea of dividing the to-be-quantized information into a plurality of quantization parts and separately quantizing each quantization part is provided. On this basis, a representation format of a quantization dictionary is provided. Based on the representation format, a quantization dictionary may be represented by a dictionary usage manner and dictionary content. In the dictionary representation format, a correspondence is actually established between the R quantization parts of the to-be-quantized information and the M quantization sub-dictionaries (sub-dictionaries for short). In the correspondence, if the first sub-dictionary in the M sub-dictionaries corresponds to the first quantization part in the R quantization parts, the first sub-dictionary is used to quantize the first quantization part, or the first sub-dictionary is used to dequantize the information obtained by quantizing the first quantization part, and each dictionary element in dictionary content of the first sub-dictionary is a candidate of the first quantization part. Based on the representation format of the quantization dictionary provided in this application, overheads of storing the quantization dictionary by the device can be reduced.

Optionally, after quantizing the to-be-quantized information by using the first quantization dictionary to obtain the quantized information, the first device may send the quantized information to a second device.

Optionally, the information that is obtained by separately quantizing the R quantization parts and that is received by the first device is from the second device.

In addition, in a known deep learning-based channel information compression feedback mechanism, a base station side and a UE side each store a same quantization dictionary. The quantization dictionary is used for quantization (or dequantization) in various scenarios. In other words, the mechanism is not distinguished in different scenarios. For example, a same quantization dictionary is used in a high-speed scenario, a low-speed scenario, an indoor scenario, an outdoor scenario, or the like. Considering that in different scenarios, value distribution of to-be-quantized information may be completely different or have respective characteristics, if a same quantization dictionary is uniformly used and is not distinguished in the scenarios, quantization performance is poor.

Therefore, this application provides another quantization method. The quantization method is intended to use different quantization dictionaries in different scenarios, so that the quantization dictionaries can adapt to value distribution of to-be-quantized information in a current scenario, to improve quantization performance.

According to a second aspect, a quantization method is provided. The method is applied to a communication device (for example, a first device in this application), and the method includes:
The first device obtains a first quantization dictionary;
the first device quantizes first to-be-quantized information by using the first quantization dictionary, or
the first device dequantizes, by using the first quantization dictionary, received first quantized information;
the first device obtains a second quantization dictionary; and
the first device quantizes second to-be-quantized information by using the second quantization dictionary, or
the first device dequantizes, by using the second quantization dictionary, received second quantized information.

The first quantization dictionary includes a plurality of dictionary elements, and each dictionary element included in the first quantization dictionary is a candidate of to-be-quantized information generated in a first quantization scenario.

The second quantization dictionary includes a plurality of dictionary elements, and each dictionary element included in the second quantization dictionary is a candidate of to-be-quantized information generated in a second quantization scenario.

The first quantization dictionary is different from the second quantization dictionary.

Optionally, the first quantization dictionary corresponds to the first quantization scenario, and the second quantization dictionary corresponds to the second quantization scenario.

Optionally, value distribution of the first to-be-quantized information is different from value distribution of the second to-be-quantized information.

In other words, whether value distribution of to-be-quantized information is the same may be used as a basis for determining whether the to-be-quantized information is in different quantization scenarios.

For example, if value distribution of the to-be-quantized information generated in the first quantization scenario is the same as or close to value distribution of the to-be-quantized information generated in the second quantization scenario, for example, does not exceed a determined threshold, the first quantization scenario and the second quantization scenario are actually a same quantization scenario. In this case, when the first quantization scenario changes to the second quantization scenario, or the second quantization scenario changes to the first quantization scenario, the quantization dictionary does not need to be updated. On the contrary, if value distribution of the to-be-quantized information generated in the first quantization scenario differs greatly from value distribution of the to-be-quantized information generated in the second quantization scenario, for example, exceeds a determined threshold, it is considered that the first quantization scenario and the second quantization scenario are different quantization scenarios. If the first quantization scenario changes to the second quantization scenario, or the second quantization scenario changes to the first quantization scenario, a quantization dictionary adapting to the current quantization scenario needs to be selected.

In an example, in a positioning scenario of some communication systems, if positioning information, for example, position coordinates of a to-be-positioned device, needs to be quantized, a change of position distribution means a change of a positioning scenario. For another example, in a scenario in which UE feeds back CSI to a network side, a change in a channel state causes a change in value distribution of the CSI, and therefore may be considered as a change in a CSI feedback scenario. These different scenarios are examples of the foregoing different quantization scenarios.

Optionally, in different quantization scenarios, value distribution dimensions of to-be-quantized information may be different, for example, may be two-dimensional, three-dimensional, or more-dimensional. This is not limited. For example, in a positioning scenario, positioning information may be three-dimensional spatial coordinates.

Optionally, in the method according to the second aspect, that the first device obtains a quantization dictionary includes: The first device obtains the quantization dictionary from a quantization dictionary table. The quantization dictionary table includes at least one candidate quantization dictionary. For example, in the second aspect, the first quantization dictionary and/or the second quantization dictionary are/is obtained (or selected) from the quantization dictionary table. For example, the first device may select an appropriate quantization dictionary from the quantization dictionary table based on different quantization scenarios.

With reference to the second aspect, in a first implementation of the second aspect, the first quantization dictionary includes M sub-dictionaries, the M sub-dictionaries are used to separately quantize R quantization parts of the to-be-quantized information or used to dequantize information obtained by separately quantizing R quantization parts, and both M and R are positive integers.

The second quantization dictionary includes C sub-dictionaries, the C sub-dictionaries are used to separately quantize S quantization parts of the to-be-quantized information or used to dequantize information obtained by separately quantizing S quantization parts, and both S and C are positive integers.

The first quantization dictionary includes a dictionary usage manner and respective dictionary content of the M sub-dictionaries. The dictionary usage manner indicates a correspondence between the M sub-dictionaries and the R quantization parts, a first sub-dictionary in the M sub-dictionaries corresponds to a first quantization part in the R quantization parts, and the first sub-dictionary is used to quantize the first quantization part, or the first sub-dictionary is used to dequantize information obtained by quantizing the first quantization part. Dictionary content of each sub-dictionary in the M sub-dictionaries includes at least one dictionary element, and each dictionary element included in the first sub-dictionary in the M sub-dictionaries is a candidate of quantization information of the first quantization part.

The second quantization dictionary includes a dictionary usage manner and respective dictionary content of the C sub-dictionaries. The dictionary usage manner indicates a correspondence between the C sub-dictionaries and the S quantization parts, a first sub-dictionary in the C sub-dictionaries corresponds to a first quantization part in the S quantization parts, and the first sub-dictionary is used to quantize the first quantization part, or the first sub-dictionary is used to dequantize information obtained by quantizing the first quantization part. Dictionary content of each sub-dictionary in the C sub-dictionaries includes at least one dictionary element, and each dictionary element included in the first sub-dictionary in the C sub-dictionaries is a candidate of quantization information of the first quantization part.

Because a structure of the second quantization dictionary is similar to a structure of the first quantization dictionary, but a quantity of sub-dictionaries or dictionary content of one or more sub-dictionaries is different, the following description of the first quantization dictionary may also be applicable to the second quantization dictionary. For brevity, the following uses the first quantization dictionary as an example for description.

**In** addition, for the dictionary content of the quantization dictionary in the second aspect and a specific implementation and procedure of obtaining the quantization dictionary by the first device, refer to the specific implementation and procedure of obtaining the quantization dictionary by the first device in the first aspect. Details are not described again in this specification.

With reference to the first aspect or the first implementation of the second aspect, in some implementations of the first aspect or the second aspect, each dictionary element included in the first sub-dictionary corresponds to one piece of quantization information and one index, and
that each dictionary element included in the first sub-dictionary is a candidate of quantization information of the first quantization part includes:
the quantization information corresponding to each dictionary element included in the first sub-dictionary is a candidate of the quantization information of the first quantization part.

**In** this implementation, based on a representation format of a quantization dictionary, dictionary content of each sub-dictionary in the quantization dictionary includes dictionary elements, and each dictionary element corresponds to one piece of quantization information and one index. An index of a dictionary element may uniquely indicate the dictionary element in the sub-dictionary, and may further uniquely correspond to quantization information corresponding to the dictionary element. Therefore, when an updated part of the quantization dictionary is transmitted, if only a part of dictionary elements in a sub-dictionary are updated, only updated dictionary elements in the sub-dictionary need to be transmitted, and the complete quantization dictionary does not need to be transmitted, so that overheads of transmitting the quantization dictionary can be reduced.

With reference to the first aspect or the first implementation of the second aspect, in some implementations of the first aspect or the second aspect, that the first device obtains a first quantization dictionary includes:
the first device updates the second quantization dictionary to obtain the first quantization dictionary, and
the method further includes:
   the first device sends all or a part of the first quantization dictionary to a second device.

In this implementation, the first device updates a quantization dictionary, and provides an updated quantization dictionary for the second device to use.

Optionally, the first device is a terminal device, and the second device is an access network device. Because a function of the quantization dictionary is to quantize an output of an encoder on a terminal side, the terminal device may obtain a quantization dictionary with higher quantization precision based on output distribution of the encoder.

With reference to the first aspect or the first implementation of the second aspect, in some implementations of the first aspect or the second aspect, the M sub-dictionaries include P sub-dictionaries and Q sub-dictionaries.

The P sub-dictionaries are selected by the first device from a quantization dictionary table stored in the first device, and the quantization dictionary table includes at least P candidate sub-dictionaries.

The Q sub-dictionaries are obtained by the first device through dictionary training.

0≤P≤M, 0≤Q≤M, P+Q=M, and P and Q are integers.

In this implementation, the first quantization dictionary obtained by the first device through update includes the M sub-dictionaries. The M sub-dictionaries may be selected from the quantization dictionary table, may be obtained through dictionary training, or may be obtained in a combination of the two manners. The first device updates the quantization dictionary based on a change of an application scenario (for example, a low-speed scenario to a high-speed scenario), so that good quantization performance can be always obtained in various different application scenarios.

With reference to the first aspect or the first implementation of the second aspect, in some implementations of the first aspect or the second aspect, that the first device sends a part of the first quantization dictionary to a second device includes:
The first device sends a first message to the second device, where the first message indicates an updated part of the first quantization dictionary compared with the second quantization dictionary.

Optionally, that the first message "indicates" the updated part may be alternatively represented as that the first message "carries" the updated part, and a specific indication manner for the updated part is not limited. To be specific, the indication may be implemented by including the updated part, or may be implemented by other information corresponding to the updated part. A correspondence between the updated part and the other information may be predefined in a protocol. For example, the correspondence is pre-stored in the first device and the second device, or is pre-configured for the first device and/or the second device. The pre-configuration may be implemented by the first device and/or the second device, or implemented by another device other than the first device and the second device.

Optionally, the first quantization dictionary corresponds to the first quantization scenario, and the second quantization dictionary corresponds to the second quantization scenario.

Optionally, value distribution of the first to-be-quantized information is different from value distribution of the second to-be-quantized information.

In other words, whether value distribution of to-be-quantized information is the same may be used as a basis for determining whether the to-be-quantized information is in different quantization scenarios.

For example, if value distribution of the to-be-quantized information generated in the first quantization scenario is the same as or close to value distribution of the to-be-quantized information generated in the second quantization scenario, for example, does not exceed a determined threshold, the first quantization scenario and the second quantization scenario are actually a same quantization scenario. In this case, when the first quantization scenario changes to the second quantization scenario, or the second quantization scenario changes to the first quantization scenario, the quantization dictionary does not need to be updated. On the contrary, if value distribution of the to-be-quantized information generated in the first quantization scenario differs greatly from value distribution of the to-be-quantized information generated in the second quantization scenario, for example, exceeds a determined threshold, it is considered that the first quantization scenario and the second quantization scenario are different quantization scenarios. If the first quantization scenario changes to the second quantization scenario, or the second quantization scenario changes to the first quantization scenario, a quantization dictionary adapting to the current quantization scenario needs to be selected.

In an example, in a positioning scenario of some communication systems, if positioning information, for example, position coordinates of a to-be-positioned device, needs to be quantized, a change of position distribution means a change of a positioning scenario. For another example, in a scenario in which UE feeds back CSI to a network side, a change in a channel state causes a change in value distribution of the CSI, and therefore may be considered as a change in a CSI feedback scenario. These different scenarios are examples of the foregoing different quantization scenarios.

Optionally, in different quantization scenarios, value distribution dimensions of to-be-quantized information may be different, for example, may be two-dimensional, three-dimensional, or more-dimensional. This is not limited. For example, in a positioning scenario, positioning information may be three-dimensional spatial coordinates.

In this implementation, because the representation format of the quantization dictionary provided in this application is used, after the quantization dictionary is updated, the first device only needs to transmit the updated part of the quantization dictionary to the second device, instead of a complete updated quantization dictionary, to transmit the updated quantization dictionary from the first device to the second device. Because the complete quantization dictionary is huge, transmitting only the updated part can reduce overheads of transmitting the quantization dictionary.

With reference to the first aspect or the first implementation of the second aspect, in some implementations of the first aspect or the second aspect, the updated part includes:
a correspondence between L quantization parts in the R quantization parts and sub-dictionaries, where 1≤L≤R, and L is an integer; and/or
dictionary content of sub-dictionaries corresponding to Z quantization parts in the R quantization parts, where 1≤Z≤R, and Z is an integer.

In this implementation, updating of the quantization dictionary may include updating of a dictionary usage manner, updating of dictionary content, or updating of both a dictionary usage manner and dictionary content. When the first device transmits the updated part to the second device, only a part or all of updated correspondences and/or a part or all of updated dictionary content need to be transmitted, so that overheads of transmitting the quantization dictionary can be reduced.

It should be understood that the foregoing updated part including the correspondence between the L quantization parts and the sub-dictionaries indicates that the dictionary usage manner of the first quantization dictionary is updated, and the updated part including the dictionary content of sub-dictionaries corresponding to Z quantization parts indicates that dictionary content of the first quantization dictionary is updated.

It should be understood that the part of updated correspondences refer to that correspondences between only some quantization parts in the R quantization parts and sub-dictionaries are updated, but not all correspondences between the R quantization parts and sub-dictionaries are updated. In addition, a part of updated dictionary content is also similar, which refers to that a part of dictionary content in the quantization dictionary is updated, for example, dictionary elements in a part of sub-dictionaries rather than dictionary content in all sub-dictionaries are updated. In addition, for a sub-dictionary whose dictionary content is updated, only a part of dictionary elements rather than each dictionary element may be updated. Compared with transmitting a complete quantization dictionary, transmission overheads can be reduced in this implementation except in a case in which all correspondences are updated and all dictionary elements in all sub-dictionaries are updated. In addition, fewer updated parts of the quantization dictionary indicate more significant reduction of the transmission overheads compared with the transmission of the complete quantization dictionary.

With reference to the first aspect, in some implementations of the first aspect, if the updated part includes the correspondence between the L quantization parts in the R quantization parts and the sub-dictionaries, the first message indicates the L quantization parts and identifiers of the sub-dictionaries respectively corresponding to the L quantization parts; and/or
if the updated part includes the dictionary content of the sub-dictionaries corresponding to the Z quantization parts in the R quantization parts, the first message indicates identifiers of the Z sub-dictionaries, and updated dictionary elements and indexes of the Z sub-dictionaries.

Optionally, in this implementation, there may be one or more first messages. In other words, information included in the first message may be carried in a same message or more than one message.

For example, the first message includes a plurality of messages. For example, a first message A includes the L quantization parts, and a first message B carries, in a preset sequence, the identifiers of the sub-dictionaries respectively corresponding to the L quantization parts. Alternatively,
for another example, a plurality of messages respectively carry, in a preset sequence, quantization parts and identifiers corresponding to the quantization parts. For example, the preset sequence includes a sequence of quantization parts in the information. For example, a first message a includes a first quantization part in the L quantization parts and an identifier of a sub-dictionary corresponding to the first quantization part, and a first message b includes a second quantization part in the L quantization parts and an identifier of a sub-dictionary corresponding to the second quantization part, and so on.

In addition, the updated dictionary element and index include one or more of the following:
a newly added dictionary element and index, and
a modified dictionary element and an index corresponding to the dictionary element.

Optionally, when the identifier of the sub-dictionary is a newly added identifier in the quantization dictionary, the sub-dictionary may be considered as a newly added sub-dictionary. When the update of the dictionary usage manner included in the updated part includes the identifier of the newly added sub-dictionary, the dictionary content of the sub-dictionary included in the updated part may further include all dictionary elements in the sub-dictionary and corresponding indexes.

In this implementation, the first device indicates the updated part of the quantization dictionary to the second device, so that transmission overheads can be reduced.

With reference to the first aspect or the first implementation of the second aspect, in some implementations of the first aspect or the second aspect, before the first device obtains a first quantization dictionary, the method further includes:
The first device sends first information to the second device, where the first information indicates that the first device updates the second quantization dictionary.

In this implementation, because the first device and the second device share one quantization dictionary, the quantization dictionary cannot be updated by the first device and the second device separately, but needs to be transmitted to the other side after being completed on one side. If the first information indicates that the first device updates the quantization dictionary, the second device does not modify content of the quantization dictionary in a process of updating an encoder or a decoder of the second device, so that it can be ensured that quantization dictionaries stored in the first device and the second device are always consistent. Optionally, in a scenario in which a terminal device feeds back CSI to a network device, accuracy of CSI information restored by a network side can be ensured.

With reference to the first aspect, in some implementations of the first aspect, after the first device sends all or a part of the first quantization dictionary to the second device, the method further includes:
The first device receives second information from the second device, where the second information is used to request to enable the first quantization dictionary.

In an implementation, the first device sends the first quantization dictionary to the second device. When accurately receiving the first quantization dictionary and determining to use the first quantization dictionary, the second device requests the first device to enable the first quantization dictionary, so that reliability of synchronously updating the quantization dictionary between the two devices can be improved. For example, if the second device does not accurately receive the first quantization dictionary, or after the second device receives the first quantization dictionary, quantization performance does not meet a requirement after evaluation, the second device may not accept enabling a new quantization dictionary.

With reference to the first aspect or the first implementation of the second aspect, in some implementations of the first aspect or the second aspect, the method further includes:
The first device sends third information to the second device, where the third information indicates to enable the first quantization dictionary.

In this implementation, the first device sends the third information to the second device based on information that the second device requests to enable a new quantization dictionary, to indicate to enable the new quantization dictionary, so as to keep synchronous updating of the quantization dictionary between the first device and the second device.

With reference to the first aspect or the first implementation of the second aspect, in some implementations of the first aspect or the second aspect, that the first device quantizes to-be-quantized information by using the first quantization dictionary includes:
after a time interval T from a moment at which the third information is sent, the first device enables the first quantization dictionary to quantize the to-be-quantized information, where the time interval T is agreed on based on a protocol or indicated by using the third information, or
that the first device dequantizes, by using the first quantization dictionary, received information obtained by quantizing R quantization parts includes:
   after a time interval T from a moment at which the third information is sent, the first device enables the first quantization dictionary to dequantize the received information obtained by quantizing the R quantization parts, where the time interval T is agreed on based on a protocol or indicated by using the third information.

Optionally, the time interval T may be determined by the second device and sent to the first device. For example, the time interval T may be carried in the second information used to request to enable the first quantization dictionary. This is not limited. Alternatively, the time interval T may be determined by the first device and the second device through negotiation by using other signaling or messages, and is not limited to being carried or indicated through the second information or the third information.

With reference to the first aspect or the first implementation of the second aspect, in some implementations of the first aspect or the second aspect, that the first device obtains a first quantization dictionary includes:
The first device receives all or a part of the first quantization dictionary from the second device.

In this implementation, the quantization dictionary is updated by the second device, and a new updated quantization dictionary is transmitted to the first device. According to the representation format of the quantization dictionary provided in this application, the first device receives the first quantization dictionary obtained through update. Specifically, the first device receives an updated part of the dictionary usage manner and an updated part of the dictionary content in the first quantization dictionary. Compared with transmitting the complete quantization dictionary, overheads of transmitting the quantization dictionary can be reduced.

With reference to the first aspect or the first implementation of the second aspect, in some implementations of the first aspect or the second aspect, that the first device receives a part of the first quantization dictionary from the second device includes:
The first device receives a second message from the second device, where the second message indicates an updated part of the first quantization dictionary compared with a second quantization dictionary, and the first quantization dictionary is obtained by updating the second quantization dictionary by the second device.

With reference to the first aspect, in some implementations of the first aspect, the updated part includes:
a correspondence between L quantization parts in the R quantization parts and sub-dictionaries, where 1≤L≤R, and L is an integer; and/or
dictionary content of sub-dictionaries corresponding to Z quantization parts in the R quantization parts, where 1≤Z≤R, and Z is an integer.

With reference to the first aspect or the first implementation of the second aspect, in some implementations of the first aspect or the second aspect, if the updated part includes the correspondence between the L quantization parts in the R quantization parts and the sub-dictionaries, the second message indicates the L quantization parts and identifiers of the sub-dictionaries respectively corresponding to the L quantization parts; and/or
if the updated part includes the dictionary content of the sub-dictionaries corresponding to the Z quantization parts in the R quantization parts, the second message indicates identifiers of the Z sub-dictionaries, and updated dictionary elements and indexes of the Z sub-dictionaries.

With reference to the first aspect or the first implementation of the second aspect, in some implementations of the first aspect or the second aspect, the method further includes:
If the first device determines that the obtained first quantization dictionary has a defect, the first device sends fourth information to the second device, where the fourth information indicates the second device to send a defect part of the first quantization dictionary, and the defect part includes a defect of the dictionary usage manner and/or a defect of the dictionary content of the first quantization dictionary; and
the first device receives the defect part from the second device.

In this implementation, a device that receives a quantization dictionary from the other party needs to determine whether the quantization dictionary is completely received. If the quantization dictionary has a defect, the other party may be requested to send a defect part, so that reliability of transmitting the quantization dictionary can be ensured.

With reference to the first aspect, in some implementations of the first aspect, before the first device obtains all or a part of the first quantization dictionary, the method further includes:
The first device receives fifth information from the second device, where the fifth information indicates that the second device updates a quantization dictionary.

With reference to the first aspect, in some implementations of the first aspect, after the first device obtains all or a part of the first quantization dictionary, the method further includes:
The first device sends sixth information to the second device, where the sixth information is used to request to enable the first quantization dictionary.

With reference to the first aspect or the first implementation of the second aspect, in some implementations of the first aspect or the second aspect, the method further includes:
The first device receives seventh information from the second device, where the seventh information indicates to enable the first quantization dictionary.

With reference to the first aspect or the first implementation of the second aspect, in some implementations of the first aspect or the second aspect, that the first device quantizes to-be-quantized information by using the first quantization dictionary includes:
after a time interval T from a moment at which the seventh information is received, the first device enables the first quantization dictionary to quantize the to-be-quantized information, where the time interval T is agreed on based on a protocol or indicated by using the seventh information; or
that the first device dequantizes, by using the first quantization dictionary, received information obtained by quantizing R quantization parts includes:
   after a time interval T from a moment at which the seventh information is received, the first device enables the first quantization dictionary to dequantize the received information obtained by quantizing the R quantization parts, where the time interval T is agreed on based on a protocol or indicated by using the seventh information.

Optionally, the time interval T may be determined by the first device and sent to the second device. For example, the time interval T may be carried in the sixth information used to request to enable the first quantization dictionary. This is not limited. Alternatively, the time interval T may be determined by the first device and the second device through negotiation by using other signaling or messages, and is not limited to being carried or indicated through the sixth information or the seventh information.

In the foregoing several implementations, the second device updates the quantization dictionary and transmits the updated quantization dictionary to the first device. Technical effects of these implementations are equivalent to technical effects of corresponding implementations in which the first device updates the quantization dictionary and transmits the updated quantization dictionary to the second device. Details are not described again.

With reference to the first aspect or the first implementation of the second aspect, in some implementations of the first aspect or the second aspect, the first device is an access network device, and the second device is a terminal device.

After the first device obtains the first quantization dictionary, the method further includes:
The first device evaluates quantization performance of the first quantization dictionary; and
if it is determined that a decoder of the first device does not match the first quantization dictionary, the first device updates the decoder based on the first quantization dictionary.

With reference to the first aspect or the first implementation of the second aspect, in some implementations of the first aspect or the second aspect, the first device is an access network device, and the second device is a terminal device.

Before the first device enables the first quantization dictionary, the method further includes:
The first device receives first quantized information from the second device; and
the first device dequantizes the first quantized information based on the first quantized information and the second quantization dictionary.

In this implementation, before enabling the updated quantization dictionary, the access network device dequantizes the received quantized information (or restores channel information) by using the quantization dictionary before update, to ensure that the access network device and the terminal device always use a same quantization dictionary synchronously.

With reference to the first aspect or the first implementation of the second aspect, in some implementations of the first aspect or the second aspect, the first device is an access network device, and the second device is a terminal device.

After the first device enables the first quantization dictionary, the method further includes:
The first device receives second quantized information from the second device; and
the first device dequantizes the second quantized information based on the second quantized information and the first quantization dictionary.

In this implementation, after enabling the new quantization dictionary, the access network device dequantizes the received quantized information by using the new quantization dictionary, to ensure that the access network device and the terminal device always use a same quantization dictionary synchronously.

With reference to the first aspect or the first implementation of the second aspect, in some implementations of the first aspect or the second aspect, the first device is a terminal device, and the second device is an access network device.

After the first device obtains the first quantization dictionary, the method further includes:
The first device evaluates quantization performance of the first quantization dictionary; and
if it is determined that an output of an encoder of the first device does not match the first quantization dictionary, the first device updates the encoder based on the first quantization dictionary.

In this implementation, the quantization dictionary is updated by a base station, and an updated quantization dictionary is transmitted to the terminal device. The terminal device evaluates quantization performance of the quantization dictionary, and updates the encoder based on the new quantization dictionary when the encoder does not match the new quantization dictionary, so that the encoder can better match the new quantization dictionary, thereby improving the quantization performance.

With reference to the first aspect or the first implementation of the second aspect, in some implementations of the first aspect or the second aspect, the first device is a terminal device, and the second device is an access network device.

Before the first device enables the first quantization dictionary, the method further includes:
The first device determines to-be-fed-back quantized information of first channel information based on the second quantization dictionary; and
the first device sends the quantized information of the first channel information to the second device.

In this implementation, before enabling the updated quantization dictionary, the terminal device quantizes channel information by using the quantization dictionary before update, so that it can be ensured that the terminal device and the network device always use a same quantization dictionary synchronously.

With reference to the first aspect or the first implementation of the second aspect, in some implementations of the first aspect or the second aspect, the first device is a terminal device, and the second device is an access network device.

After the first device enables the first quantization dictionary, the method further includes:
The first device determines to-be-fed-back quantized information of second channel information based on the first quantization dictionary; and
the first device sends the quantized information of the second channel information to the second device.

In this implementation, after enabling the updated quantization dictionary, the terminal device quantizes channel information by using the updated quantization dictionary, so that it can be ensured that the terminal device and the network device always use a same quantization dictionary synchronously.

It should be understood that both the first channel information and the second channel information in this implementation are examples of the to-be-quantized information. In other words, an example of the to-be-quantized information may be channel information, for example, CSI. Specifically, in an example, the channel information may be output information of an encoder on a UE side, for example, compressed information of CSI.

With reference to the first aspect or the first implementation of the second aspect, in some implementations of the first aspect or the second aspect, that the first device quantizes to-be-quantized information by using the first quantization dictionary includes:
If the first device is a terminal device, and the to-be-quantized information is output information of an encoder, the first device quantizes the output information of the encoder by using the first quantization dictionary;
   or
if the first device is an access network device, the first device dequantizes, by using the first quantization dictionary, the received information obtained by quantizing the R quantization parts.

According to a third aspect, a quantization or dequantization apparatus is provided. The apparatus has a function of implementing the method in any one of the first aspect or the second aspect or the possible implementations of the first aspect or the second aspect. The function may be implemented by hardware, or may be implemented by executing corresponding software by hardware. The hardware or the software includes one or more units that correspond to the foregoing function.

Optionally, the apparatus may be an access network device, may be an apparatus, a module, a chip (or a chip system), or the like in the access network device, or may be an apparatus that can be used in cooperation with the access network device. Alternatively, the apparatus may be a terminal device, may be an apparatus, a module, a chip (or a chip system), or the like in the terminal device, or may be an apparatus that can be used in cooperation with an access network device.

In a design, the apparatus may include modules that are in one-to-one correspondence with the methods/operations/steps/actions described in the first aspect. The module may be implemented by a hardware circuit, software, or a combination of a hardware circuit and software. In another design, the apparatus may include a processing module and a communication module.

For example, the processing module is configured to implement processing/operations/steps/actions and the like performed inside the apparatus in any one of the first aspect or the second aspect or the possible implementations of the first aspect or the second aspect. The communication module is configured to perform actions such as sending/receiving/transmission performed by the apparatus. For details, refer to the descriptions of the apparatus embodiments. Alternatively, the communication module may also be referred to as a transceiver module, and includes a receiving and/or sending function.

According to a fourth aspect, a quantization or dequantization apparatus is provided. The apparatus includes a processor and a memory. Optionally, the quantization or dequantization apparatus may further include a transceiver. The memory is configured to store a computer program. The processor is configured to invoke and run the computer program stored in the memory, and control the transceiver to receive and send a signal, to enable the communication apparatus to perform the method according to any one of the first aspect or the second aspect or the possible implementations of the first aspect or the second aspect.

According to a fifth aspect, a quantization or dequantization apparatus is provided. The apparatus includes a processor and a communication interface. The communication interface is configured to receive data and/or information, and transmit the received data and/or information to the processor. The processor processes the data and/or the information. Moreover, the communication interface is further configured to output the data and/or the information processed by the processor, to enable the method according to any one of the first aspect or the second aspect or the possible implementations of the first aspect or the second aspect to be performed.

For example, the communication interface may be a transceiver, a circuit, a bus, a module, a pin, or a communication interface of another type.

According to a sixth aspect, a quantization or dequantization apparatus is provided. The apparatus includes at least one processor. The at least one processor is coupled to at least one memory, and the at least one processor is configured to execute a computer program or instructions stored in the at least one memory, to enable the communication apparatus to perform the method according to any one of the first aspect or the second aspect or the possible implementations of the first aspect or the second aspect.

Optionally, the apparatus may be a chip or a chip system.

According to a seventh aspect, a computer-readable storage medium is provided. The computer-readable storage medium stores computer instructions. When the computer instructions are run on a computer, the method according to any one of the first aspect or the second aspect or the possible implementations of the first aspect or the second aspect is performed.

According to an eighth aspect, a computer program product is provided. The computer program product includes computer program code. When the computer program code runs on a computer, the method according to any one of the first aspect or the second aspect or the possible implementations of the first aspect or the second aspect is performed.

According to a ninth aspect, a chip is provided. The chip is configured to read a computer program stored in a memory, to perform the method according to any one of the first aspect or the second aspect or the possible implementations of the first aspect or the second aspect. Alternatively, the chip includes a circuit configured to perform the method according to any one of the first aspect or the second aspect or the possible implementations of the first aspect or the second aspect.

According to a tenth aspect, a chip system is further provided. The chip system includes a processor, configured to support an apparatus in implementing the method according to any one of the first aspect or the second aspect or the possible implementations of the first aspect or the second aspect. In a possible design, the chip system further includes a memory, and the memory is configured to store a program and data that are necessary for the apparatus. The chip system may include a chip, or may include a chip and another discrete device.

According to an eleventh aspect, a wireless communication system is provided. The system includes the quantization or dequantization apparatus according to the third aspect, the fourth aspect, the fifth aspect, or the sixth aspect. For example, the system may include the first device and the second device, the first device and the third device, or the second device and the third device in embodiments of this application.

### BRIEF DESCRIPTION OF DRAWINGS

FIG. 1 is a diagram of a communication scenario applicable to an embodiment of this application;
FIG. 2 is an example of deep learning-based channel compression feedback applicable to an embodiment of this application;
FIG. 3 is a diagram of a quantization method applicable to this application;
FIG. 4 is a diagram of updating a quantization dictionary by using a cluster method;
FIG. 5 is an example of a quantization method according to this application;
FIG. 6 is an example of a quantization method according to this application;
FIG. 7 is a schematic block diagram of a quantization or dequantization apparatus according to this application; and
FIG. 8 is a diagram of a structure of a quantization or dequantization apparatus according to this application.

### DESCRIPTION OF EMBODIMENTS

The following describes technical solutions of this application with reference to accompanying drawings.

The technical solutions in embodiments of this application are applicable to various communication systems, including but not limited to a 5th generation (the 5th generation, 5G) system or a new radio (new radio, NR) system, a long term evolution (long term evolution, LTE) system, a long term evolution-advanced (long term evolution-advanced, LTE-A) system, an LTE frequency division duplex (frequency division duplex, FDD) system, an LTE time division duplex (time division duplex, TDD) system, and the like. The technical solutions are further applicable to a future communication system, for example, a 6th generation mobile communication system. In addition, the technical solutions are further applicable to device-to-device (device-to-device, D2D) communication, vehicle-to-everything (vehicle-to-everything, V2X) communication, machine to machine (machine to machine, M2M) communication, machine type communication (machine type communication, MTC), an internet of things (internet of things, IoT) communication system, a satellite communication system, or another communication system. In addition, the technical solutions may be further extended to a similar wireless communication system, for example, a communication system related to wireless-fidelity (wireless-fidelity, Wi-Fi), worldwide interoperability for microwave access (worldwide interoperability for microwave access, WiMAX), and the 3rd generation partnership project (3rd generation partnership project, 3gpp). This is not limited.

A network element in the communication system may send a signal to another network element or receive a signal from another network element. The signal may include information, signaling, data, or the like. The network element may also be replaced with an entity, a network entity, a device, a communication device, a communication module, a node, a communication node, or the like. In this application, a device is used as an example for description.

A communication system applicable to this application may include one or more first devices and one or more second devices. Optionally, one of the first device and the second device may be a terminal device, and the other of the first device and the second device may be a network device. Alternatively, both the first device and the second device may be network devices or terminal devices.

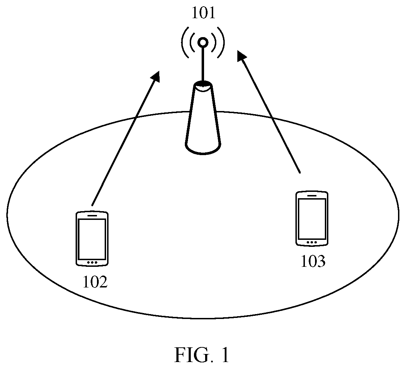

FIG. 1 is a diagram of a communication scenario applicable to an embodiment of this application. As shown in FIG. 1, this embodiment of this application is mainly applicable to a scenario in which a terminal device sends information to a network device. In an example, this embodiment of this application is applicable to a scenario in which the terminal device sends channel state information (channel state information, CSI) to the network device. In this embodiment of this application, an example in which the terminal device sends CSI to the network device is used to describe the technical solutions of this application. Based on the example, a person skilled in the art may apply the technical solutions to another scenario, for example, a scenario in which one device sends information to another device. This is not limited. It should be understood that a quantity and types of devices in the communication system shown in FIG. 1 are merely used as an example, and the present disclosure is not limited thereto. In actual application, the communication system may further include more terminal devices and more access network devices, and may further include another network element, for example, may include a core network device and/or a network element configured to implement an artificial intelligence function.

For example, the terminal device may also be referred to as user equipment (user equipment, UE), an access terminal, a subscriber unit, a subscriber station, a mobile station, a mobile console, a mobile terminal (mobile terminal, MT), a remote station, a remote terminal, a mobile device, a user terminal, a terminal, an uncrewed aerial vehicle, a wireless communication device, a user agent, or a user apparatus. The terminal device in this embodiment of this application may be a device that provides voice and/or data connectivity for a user, and may be configured to connect a person, an object, and a machine, for example, a handheld device or a vehicle-mounted device with a wireless connection function. The terminal device in this embodiment of this application may be a mobile phone (mobile phone), a tablet computer (pad), a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like.

In this embodiment of this application, an apparatus configured to implement a function of the terminal may be a terminal; or may be an apparatus, for example, a chip system or a chip, a hardware circuit, a software module, or a combination of the hardware circuit and the software module, that can support the terminal in implementing the function. The apparatus may be installed in the terminal or may be used in cooperation with the terminal. In this embodiment of this application, the chip system may include a chip, or may include a chip and another discrete device.

For example, the network device may be a device having a wireless transceiver function. The network device may be a device providing a wireless communication function service, and is usually located on a network side, including but not limited to a next generation NodeB (gNodeB, gNB) in a 5th generation (5th generation, 5G) communication system, a base station in a 6th generation (6th generation, 6G) mobile communication system, a base station in a future mobile communication system, or an access node in a wireless-fidelity (wireless fidelity, Wi-Fi) system, an evolved NodeB (evolved NodeB, eNB) in a long term evolution (long term evolution, LTE) system, a radio network controller (radio network controller, RNC), a NodeB (NodeB, NB), a base station controller (base station controller, BSC), a home base station (for example, a home evolved NodeB or a home NodeB, HNB), a baseband unit (base band unit, BBU), a transmission reception point (transmission reception point, TRP), a transmission point (transmission point, TP), a base transceiver station (base transceiver station, BTS), a satellite, an uncrewed aerial vehicle, or the like. In a network structure, the network device may include a central unit (central unit, CU) node or a distributed unit (distributed unit, DU) node, or the network device may be a RAN device including a CU node and a DU node, or a RAN device including a CU-control plane node, a CU-user plane node, and a DU node. Alternatively, the network device may be a radio controller, a relay station, a vehicle-mounted device, a wearable device, and the like in a cloud radio access network (cloud radio access network, CRAN) scenario. In addition, the base station may be a macro base station, a micro base station, a relay node, a donor node, or a combination thereof. The base station may alternatively be a communication module, a modem, or a chip disposed in the foregoing device or apparatus. The base station may alternatively be a mobile switching center, a device that bears a base station function in D2D, V2X, and M2M communication, a network side device in a 6G network, a device that bears a base station function in a future communication system, or the like. The base station may support networks of a same access technology or different access technologies. This is not limited.

In this embodiment of this application, an apparatus configured to implement a function of the network device may be a network device, or may be an apparatus, for example, a chip system or a chip, a hardware circuit, a software module, or a combination of the hardware circuit and the software module, that can support the network device in implementing the function. The apparatus may be installed in the network device or may be used in cooperation with the network device. In this embodiment of this application, the chip system may include a chip, or may include a chip and another discrete device.

With the development of wireless communication technologies, supported services continuously increase, and higher requirements are imposed on a communication system in terms of indicators such as a system capacity and a communication latency. A communication rate can be effectively improved by extending an available bandwidth of the UE. To support a wider available bandwidth, a plurality of consecutive or non-consecutive frequency bands may be allocated to the UE for communication. To support effective communication on each frequency band, the base station needs to obtain channel state information (Channel State Information, CSI) on each frequency band. However, in a currently widely used frequency division duplex (frequency division duplex, FDD)-based communication system, uplink and downlink channels do not have reciprocity, and the base station needs to obtain downlink CSI through uplink feedback of the UE. In other words, the base station sends a downlink reference signal to the UE, and the UE receives the downlink reference signal. Because the UE knows sending information of the downlink reference signal, the UE may estimate (measure), based on the received downlink reference signal, a downlink channel through which the downlink reference signal passes. The UE generates CSI based on a downlink channel matrix obtained through measurement, and feeds back the CSI to the base station.

In an FDD system, an important part of CSI feedback is a precoding matrix indicator (precoding matrix indicator, PMI). In other words, in the CSI, bits 0 and 1 may be used to quantize a channel matrix or a precoding matrix. A design of the PMI (also referred to as a codebook design) is a basic issue in a mobile communication system. In a conventional codebook design method, a series of precoding matrices and corresponding numbers are predefined (agreed on) in a protocol, and these precoding matrices are referred to as codewords. A channel matrix or a precoding matrix may be approximated by using a predefined codeword or a linear combination of a plurality of predefined codewords. Therefore, the UE may feed back, to the base station by using the PMI, one or more of a number corresponding to the codeword and a weighting coefficient, so that a base station side recovers the channel matrix or the precoding matrix. Higher precision of CSI fed back by the UE indicates more abundant information, more accurate channel information restored by the base station based on the CSI, and more accurate precoding matrix determined by the base station, so that better downlink spatial multiplexing performance indicates a higher signal to interference plus noise ratio received by the UE and a higher system capacity. However, because a size of a complete channel matrix is in direct proportion to a quantity of antenna ports, as a size of an antenna array in a system increases, a quantity of antenna ports that can be supported increases. In a massive MIMO system, feedback overheads of feeding back a complete channel matrix by the UE to the base station through the CSI are also huge.

In a machine learning method, a non-linear feature extraction capability is stronger, and a channel matrix feature can be extracted more effectively. In comparison with a conventional solution, feedback of a same scale may include more channel information, so that an information loss of CSI compression feedback is reduced and channel restoration precision of a base station side is improved. In a known technology, artificial intelligence (artificial Intelligence, AI) is introduced into a wireless communication network, and an AI model-based CSI feedback solution is provided. The terminal device compresses and feeds back the CSI by using the AI model, and the access network device restores the compressed CSI by using the AI model. In comparison with a conventional solution, in this solution, a smaller feedback amount may be used to represent same channel information, so that feedback overheads are further reduced. The AI model may include a neural network.

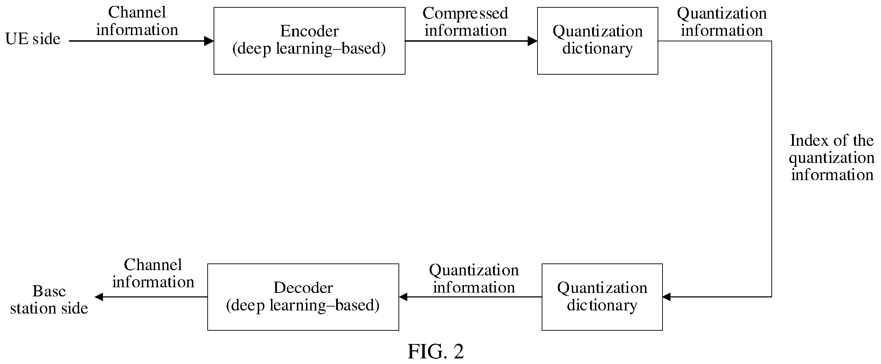

FIG. 2 is an example of deep learning-based channel compression feedback applicable to an embodiment of this application. As shown in FIG. 2, on a UE side, channel information is compressed by a deep learning-based encoder, compressed information is quantized and represented by using a quantization dictionary (the compressed information is quantized and represented by using an element that is closest to the compressed information and that is in the quantization dictionary), and an index of the quantization representation in the dictionary is fed back to a base station by using a finite bit. The base station side has a same quantization dictionary as the UE side. Therefore, the fed back index may be restored to a quantization representation of the compressed information, and then the quantization representation of the compressed information is input into a deep learning-based decoder, to restore channel information. In the foregoing process, the UE and the base station need to share a same quantization dictionary. However, because a quantization dictionary is usually very large, overheads of storing the quantization dictionary by the UE and the base station are also huge.

In addition, when the quantization dictionary needs to be updated due to an environment or configuration change, the quantization dictionary of the UE and the quantization dictionary of the base station need to be updated synchronously, and use time of updated quantization dictionaries also needs to be synchronized. In many current applications, an encoding process on the UE side, a decoding process on the base station side, and a quantization process use a whole AI model for joint training. After the training is completed, a trained AI model is configured on the UE side and the base station side. If the AI model or the quantization process needs to be updated subsequently, an updated AI model also needs to be transmitted to the base station side or the UE side, and a complete AI model needs to be transmitted for each update, resulting in huge transmission overheads.

Therefore, this application provides a quantization method, to reduce overheads of storing a quantization dictionary. In addition, when a quantization dictionary is updated, a complete quantization dictionary does not need to be transmitted, but only an updated part needs to be transmitted, so that overheads of transmitting the quantization dictionary can be reduced.

The following describes the technical solutions provided in this application.

The quantization method provided in this application is applicable to any scenario in which information needs to be quantized. For example, one of two devices needs to quantize information and transmit quantized information to another device, and the another device needs to dequantize received quantized information.

In addition, a method for quantizing information and a method for dequantizing received information in the solutions provided in this application may be decoupled for use. However, whether a quantization process and a dequantization process are used together is not limited. For example, in many communication scenarios, quantization and dequantization are usually used together. For example, in the foregoing listed communication system, for example, in an FDD communication scenario, UE needs to feed back channel information, like CSI information, to a base station. In this scenario, the UE needs to quantize to-be-fed back compressed information of the CSI information, and feed back the quantized information to the base station. The base station receives the quantized information from the UE, and needs to dequantize the quantized information, to finally obtain the CSI information. For another example, in some communication positioning scenarios, one device needs to feed back location information to another device, and the location information may be quantized. The another device receives the quantized information, and needs to dequantize the quantized information to obtain the location information. Therefore, a specific application scenario is not limited in this application, and the foregoing listed quantization of the channel information such as the CSI information or the location information is merely used as an example.

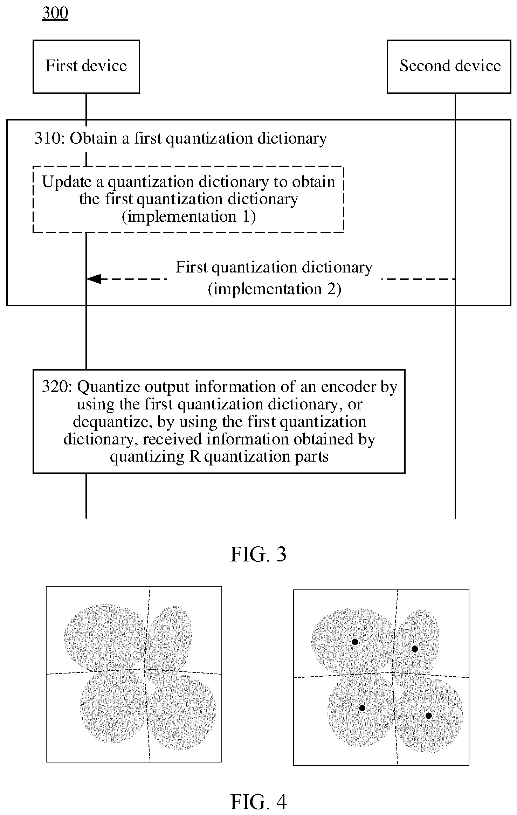

FIG. 3 is a diagram of a quantization method applicable to this application.

310: A first device obtains a first quantization dictionary.

Optionally, the first quantization dictionary may be initially generated by the first device, or may be obtained by the first device by updating a second quantization dictionary. This is not limited.

In this application, a quantization dictionary is represented by using a dictionary usage manner of the quantization dictionary and respective dictionary content of M sub-dictionaries included in the quantization dictionary. In other words, a quantization dictionary includes a dictionary usage manner and dictionary content. The dictionary content includes the respective dictionary content of the M sub-dictionaries included in the quantization dictionary.

A dictionary usage manner of the first quantization dictionary indicates a correspondence between the M sub-dictionaries and R quantization parts. The M sub-dictionaries include a first sub-dictionary, and the first sub-dictionary corresponds to a first quantization part in the R quantization parts. In this case, the first sub-dictionary is used to quantize the first quantization part, and the first sub-dictionary is any one of the M sub-dictionaries.

The first quantization dictionary is used to quantize to-be-quantized information. Specifically, the first quantization dictionary includes M sub-dictionaries, the M sub-dictionaries are used to quantize R quantization parts of the to-be-quantized information, and both M and R are positive integers. Alternatively, the first quantization dictionary includes M sub-dictionaries, and the M sub-dictionaries correspond to R quantization parts of the to-be-quantized information.

Optionally, both M and R are positive integers greater than 1.

It may be understood that dequantization is an inverse process of quantization. Therefore, the M sub-dictionaries included in the first quantization dictionary are alternatively used to dequantize information obtained by quantizing the R quantization parts, and both M and R are positive integers greater than 1. Information obtained through quantization, that is, quantized information, may be an index of quantization information that is corresponding to a quantization part and that is in a sub-dictionary. For brevity of description, the information obtained through quantization may also be referred to as a "quantization index" in the specification.

In an example, R=M, to be specific, the M sub-dictionaries are used to quantize M quantization parts. In this case, the M sub-dictionaries are in one-to-one correspondence with the M quantization parts, and each of the M sub-dictionaries is used to quantize a corresponding quantization part, as shown in an example in Table 1.

**Table 1**

| Quantization part of the to-be-quantized information | Identifier of a sub-dictionary included in the first quantization dictionary |
|---|---|
| Quantization part 1 | Y1 |
| Quantization part 2 | Y2 |
| Quantization part 3 | Y3 |

In another example, R is greater than M. In this case, some quantization parts in the R quantization parts may correspond to a same sub-dictionary in the M sub-dictionaries, as shown in an example in Table 2.

**Table 2**

| Quantization part of the to-be-quantized information | Identifier of a sub-dictionary included in the first quantization dictionary |
|---|---|
| Quantization part 1 | Y1 |
| Quantization part 2 | Y2 |
| Quantization part 3 | Y1 |

As described above, the dictionary usage manner of the first quantization dictionary indicates the correspondence between the M sub-dictionaries and the R quantization parts of the to-be-quantized information, and each of the M sub-dictionaries is used to quantize a corresponding quantization part. For example, the M sub-dictionaries include the first sub-dictionary. The first sub-dictionary corresponds to the first quantization part in the R quantization parts, and the first sub-dictionary is used to quantize the first quantization part.

For example, in Table 1, the first quantization dictionary includes three sub-dictionaries: Y1, Y2, and Y3. The to-be-quantized information includes three quantization parts: the quantization part 1, the quantization part 2, and the quantization part 3. Therefore, Y1 corresponds to the quantization part 1 in the three quantization parts. Y2 corresponds to the quantization part 2 in the three quantization parts. Y3 corresponds to the quantization part 3 in the three quantization parts. It can be learned that the dictionary usage manner indicates a quantization part corresponding to a sub-dictionary.

For another example, in Table 2, the first quantization dictionary includes two sub-dictionaries: Y1 and Y2, and the to-be-quantized information includes three quantization parts. The sub-dictionary Y1 corresponds to the quantization part 1 and the quantization part 3 in the three quantization parts. Therefore, the sub-dictionary Y1 is used to quantize the quantization part 1 and the quantization part 3 of the to-be-quantized information.

Dictionary content of each of the M sub-dictionaries includes at least one dictionary element. The first sub-dictionary is used as an example, and at least one dictionary element included in dictionary content of the first sub-dictionary is a candidate of quantization information of the first quantization part. In other words, a dictionary element included in the dictionary content of the first sub-dictionary is a candidate of quantization information of a quantization part corresponding to the first sub-dictionary. For example, in Table 1, each dictionary element included in dictionary content of Y1 is a candidate of quantization information of the quantization part 1, and each dictionary element included in dictionary content of Y2 is a candidate of quantization information of the quantization part 2. For another example, in Table 2, because Y1 corresponds to the quantization part 1 and the quantization part 3, each dictionary element in dictionary content of Y1 is not only a candidate of quantization information of the quantization part 1, but also a candidate of quantization information of the quantization part 3.

The first quantization dictionary includes M sub-dictionaries, and dictionary content of any sub-dictionary in the M sub-dictionaries includes at least one dictionary element. Further, each dictionary element corresponds to one piece of quantization information and one index. Optionally, "quantization information" corresponding to each dictionary element may be alternatively replaced with a "quantization representation". Therefore, in other words, if the first quantization part of the to-be-quantized information corresponds to the first sub-dictionary in the M sub-dictionaries, a quantization representation corresponding to each dictionary element in the first sub-dictionary is a candidate of a quantization representation of the first quantization part, as shown in an example in Table 3.

**Table 3**

| Quantization part of the to-be-quantized information | Identifiers of the M sub-dictionaries included in the first quantization dictionary | Dictionary content of the M sub-dictionaries |
|---|---|---|
| Quantization part 1 | Y1 | (a1, a2, a3, a4) |
| Quantization part 2 | Y2 | (b1, b2, b3, b4, b5, b6, b7, b8) |
| Quantization part 3 | Y3 | (c1, c2) |

As shown in Table 3, dictionary content of the sub-dictionary Y1 includes four dictionary elements: a1, a2, a3, and a4. Dictionary content of the sub-dictionary Y2 includes eight dictionary elements: b1, b2, ..., and b8. Dictionary content of the sub-dictionary Y3 includes two dictionary elements: c1 and c2. It can be learned from the foregoing description of the dictionary element that the dictionary elements a1, a2, a3, and a4 are all candidates of quantization information of the quantization part 1. Alternatively, when the quantization part 1 of the to-be-quantized information needs to be quantized, a dictionary element may be selected from the dictionary elements a1, a2, a3, and a4 in Y1 as quantization information of the quantization part 1. When quantization information of a quantization part is selected, the quantization information may be selected according to a specific rule. For example, a dictionary element whose Euclidean distance to the quantization part 1 is closest may be selected from Y1 as the quantization information of the quantization part 1. It is assumed that if the dictionary element a3 has a closest Euclidean distance to the quantization part 1, the dictionary element a3 is the quantization information of the quantization part 1, or in other words, the dictionary element a3 is a quantization representation of the quantization part 1.

The following provides a specific example.

It is assumed that the to-be-quantized information is a real number vector whose length is N. If the real number vector is divided into a plurality of quantization parts that are not repeated or omitted, the plurality of quantization parts may be separately quantized. In an example, a quantization part may be represented in a form of [x1, x2). x1 represents an index of a start point of the quantization part, and x2 represents an index of a start point of a next quantization part. For example, x1 represents an index of a start point of a quantization part 1, and x2 represents an index of a start point of a quantization part 2. Therefore, a dictionary usage manner of the quantization dictionary may be shown in Table 4. As shown in Table 4, a quantization part [x1, x2) of output information of an encoder corresponds to a sub-dictionary Y1, and Y1 is used to quantize the quantization part [x1, x2). A quantization part [x2, x3) corresponds to a sub-dictionary Y2, and Y2 is used to quantize the quantization part [x2, x3), and so on.

**Table 4**

| Quantization part of the to-be-quantized information | Identifier of a sub-dictionary |
|---|---|
| [x1, x2) | Y1 (identifier of a sub-dictionary used to quantize [x1, x2)) |
| [x2, x3) | Y2 (identifier of a sub-dictionary used to quantize [x2, x3)) |
| ... | ... |

In an example, it is assumed that the to-be-quantized information is a real number vector whose length N is 8, and the real number vector is divided into four equal-length quantization parts that are not repeated or omitted. For quantization of the real number vector, a possible dictionary usage manner is shown in Table 5.

**Table 5**

| Quantization part of the to-be-quantized information | Identifier of a sub-dictionary |
|---|---|
| [0, 2) | Y1 |
| [2, 4) | Y2 |
| [4, 6) | Y1 |
| [6, 7] | Y2 |

Table 5 shows that, a real number vector whose length N is 8 is divided into four equal-length quantization parts, a first quantization part (a zeroth value and a first value of the real number vector) and a third quantization part (a fourth value and a fifth value of the real number vector) are quantized by using a sub-dictionary identified as Y1. A second quantization part (a second value and a third value of the real number vector) and a fourth quantization part (a sixth value and a seventh value of the real number vector) are quantized by using a sub-dictionary identified as Y2.

In an example, it is assumed that the to-be-quantized information is a real number vector whose length N is 8, and is specifically [0.6, 0.2, -0.7, -0.1, 0.3, 0.8, -0.1, -0.2]. The real number vector is divided into quantization parts according to Table 5, and the quantization parts are quantized separately. To be specific, a first quantization part (a zeroth value and a first value, that is, [0.6, 0.2]) and a third quantization part (a fourth value and a fifth value, that is, [0.3, 0.8]) are quantized by using a quantization dictionary Y1, and a second quantization part (that is, a second value and a third value, that is, [-0.7, -0.1]) and a fourth quantization part (that is, a sixth value and a seventh value, that is, [-0.1, -0.2]) are quantized by using a quantization dictionary Y2.

It is assumed that the sub-dictionary Y1 includes four dictionary elements, and each of the four dictionary elements corresponds to one piece of quantization information. The four pieces of quantization information corresponding to the four dictionary elements are a1=[0.1, 0.1], a2=[0.1, 0.6], a3=[0.6, 0.1], and a4=[0.6, 0.6], and indexes that are corresponding to the four dictionary elements and that are in the sub-dictionary Y1 are (0, 1, 2, 3) in sequence.

It is assumed that the sub-dictionary Y2 includes four dictionary elements, and quantization information respectively corresponding to the four dictionary elements is b1=[-0.1, -0.1], b2=[-0.1, -0.6], b3=[-0.6, -0.1], and b4=[-0.6, -0.6] in sequence. Indexes that are corresponding to the four dictionary elements and that are in the sub-dictionary Y2 are (0, 1, 2, 3) in sequence.

Therefore, based on Table 5 and dictionary content of the sub-dictionaries Y1 and Y2, quantization information of the four quantization parts of the real number vector [0.6, 0.2, -0.7, - 0.1, 0.3, 0.8, -0.1, -0.2], which is [0.6, 0.1], [-0.6, -0.1], [0.1, 0.6], and [-0.1, -0.1], may be obtained. The four pieces of quantization information respectively correspond to an index 2 in Y1, an index 2 in Y2, an index 1 in Y1, and an index 0 in Y2. The indexes 2, 2, 1, and 0 are fed back to a base station, so that the base station can search Table 5 for a corresponding sub-dictionary, and obtain the quantization information of the four quantization parts, which is [0.6, 0.1], [-0.6, - 0.1], [0.1, 0.6], and [-0.1, -0.1].

For this example, a quantization error is a difference between the quantization information [0.6, 0.1], [-0.6, -0.1], [0.1, 0.6], and [-0.1, -0.1], and information [0.6, 0.2, -0.7, -0.1, 0.3, 0.8, -0.1, -0.2] before quantization. In an example, a method for calculating the quantization error is calculating a mean square error of the two pieces of information, that is, the quantization error=((0.6-0.6)²+(0.1-0.2)²+(-0.6+0.7)²+(-0.1+0.1)²+(0.1-0.3)²+(0.6-0.8)²+(-0.1+0.1)²+(-0.1+0.2)²))/8.

For each piece of to-be-quantized information, a quantization error may be calculated based on the foregoing steps, and an average value of a plurality of quantization errors may be used as a criterion for evaluating quantization performance of a quantization dictionary. When an average quantization error exceeds a threshold, it may be considered that the quantization dictionary cannot well quantize the to-be-quantized information. On the contrary, if the average quantization error is not greater than (less than or equal to) the threshold, it may be considered that the quantization dictionary can well quantize the to-be-quantized information, and the quantization performance can meet a quantization requirement.

In this application, the first quantization dictionary includes M sub-dictionaries, and each sub-dictionary in the M sub-dictionaries may be determined by using two parameters (K, B). K indicates that the sub-dictionary is used to quantize a quantization part whose length is K, in other words, a quantization part includes K vectors, and B indicates that B bits are used to quantize each input of a quantization part corresponding to the sub-dictionary. Different values of the B bits may correspond to different candidate quantization information. In other words, different values of the B bits are indexes of different candidate quantization information. It may be understood that a sub-dictionary whose parameter is (K, B) may include a maximum of 2^{B} dictionary elements. It should be noted that for different sub-dictionaries, values of K and B may be the same or different. For example, a sub-dictionary Y1 may be determined by (K₁, B₁), and a sub-dictionary Y2 may be determined by (K₂, B₂).

**Table a**

| Identifiers of the M sub-dictionaries | Parameter of a sub-dictionary |
|---|---|
| Y1 | (K₁, B₁) |
| Y2 | (K₂, B₂) |
| ... | ... |
| Y_{M} | (K_{M}, B_{M}) |

If a sub-dictionary is used to implement vector quantization, for a sub-dictionary whose parameter is (K, B), in an example, the sub-dictionary may include a maximum of 2^{B} dictionary elements (or elements for short), each element corresponds to a real number vector whose length is K and an index, and a real number vector corresponding to each element is a candidate of quantization information of a quantization part corresponding to the sub-dictionary. Different elements in the sub-dictionary correspond to different indexes. An index is used to uniquely identify an element in the sub-dictionary. For example, the to-be-quantized information is output information of an encoder of UE. It is assumed that a quantization part, whose length is K, of the output information of the encoder is quantized by using a sub-dictionary whose parameter is (K, B). It is assumed that in one output of the encoder, a value of the quantization part whose length is K is denoted as o1, and an element whose distance (which may refer to a Euclidean distance) is closest to o1 is found from the sub-dictionary as an approximation of o1. In this case, a real number vector whose length is K corresponding to the element is quantization information of o1, and an index corresponding to the element may be used to uniquely identify the element in the sub-dictionary, so that the index may further uniquely correspond to the quantization information of o1. The base station may find, from a same sub-dictionary based on the index of the quantization information, a corresponding real number vector whose length is K as an approximation of o1.

Optionally, if a dictionary is used to implement another quantization method, a sub-dictionary whose parameter is (K, B) may be stored in a manner of code or a model, and the code or the model includes a quantization function. An input of the quantization function is a to-be-quantized real number vector whose length is K, and an output of the quantization function is a binary bit string of B bits. The quantization function corresponds to an inverse quantization function. An input of the inverse quantization function is a binary bit string of B bits, and an output of the inverse quantization function is a real number vector whose length is K. In this application, inverse quantization and dequantization may be replaced with each other.

The foregoing describes in detail the representation format of the quantization dictionary in this application.

It may be understood that the foregoing tables are a set of some correspondences, and the correspondences may alternatively be represented in another form, for example, a character string or a function. This is not limited herein.

Optionally, in step 310, that a first device obtains a first quantization dictionary may include a plurality of possible implementations.

### Implementation 1

The first device updates the second quantization dictionary to obtain the first quantization dictionary.

It may be understood that the second quantization dictionary may be a quantization dictionary that is used by the first device and a second device before the first device obtains the first quantization dictionary through update and that is used to quantize or dequantize information exchanged between the first device and the second device.

As described above, because the first device and the second device use a same quantization dictionary, if the quantization dictionary is obtained by the first device through update, the first device needs to send the first quantization dictionary obtained through update to the second device.

Optionally, the first device and the second device may separately store a plurality of sub-dictionaries for quantization in different application scenarios (or referred to as quantization scenarios), or the first device and the second device may be used to quantize different quantization parts in the to-be-quantized information. In an example, the first device may store a quantization dictionary table, and the quantization dictionary table includes one or more candidate sub-dictionaries. The first device updates the second quantization dictionary to obtain the first quantization dictionary. Optionally, compared with the second quantization dictionary, the first quantization dictionary may have an update in a dictionary usage manner, an update in dictionary content of a sub-dictionary corresponding to one or more quantization parts of the to-be-quantized information, or updates in both the dictionary usage manner and the dictionary content in the first quantization dictionary. It should be understood that updating the second quantization dictionary to the first quantization dictionary may include a change in a quantity of quantization parts of the to-be-quantized information, for example, an increase in the quantity of quantization parts or a decrease in the quantity of quantization parts. Alternatively, the quantity of quantization parts does not change. This is not limited. The update of the quantity of quantization parts is also included in the update of the dictionary usage manner or the update of the dictionary content.

For example, the first device may select one or more candidate sub-dictionaries from the candidate sub-dictionaries in the quantization dictionary table as some sub-dictionaries in the M sub-dictionaries included in the first quantization dictionary obtained through update. Alternatively, if none of the candidate sub-dictionaries included in the quantization dictionary table is suitable for a current application scenario, the first device may perform quantization dictionary training, to obtain a new sub-dictionary. In this application, the sub-dictionary obtained by the first device through quantization dictionary training is not included by default in the quantization dictionary table stored in the first device. Alternatively, the first device obtains a new sub-dictionary through training. The first device may subsequently add the new sub-dictionary to the quantization dictionary table. Optionally, the first device may allocate a new identifier to the new sub-dictionary, to distinguish the new sub-dictionary from the existing sub-dictionaries in the quantization dictionary table. For example, the quantization dictionary table stores sub-dictionaries Y1, Y2, and Y3, the first device allocates an identifier Y4 to the new sub-dictionary obtained through training, and adds Y4 to the quantization dictionary table. In this case, the quantization dictionary table includes sub-dictionaries Y1, Y2, Y3, and Y4. Optionally, the first device may alternatively allocate an existing identifier to the new sub-dictionary, or may replace an existing sub-dictionary with the new sub-dictionary. For example, the first device allocates an identifier Y3 to the new sub-dictionary obtained through training. Therefore, the sub-dictionaries stored in the quantization dictionary table are existing sub-dictionaries Y1 and Y2 and the new sub-dictionary obtained through training (identified as Y3).

Optionally, the first quantization dictionary obtained by the first device includes M sub-dictionaries, and the M sub-dictionaries include P sub-dictionaries and Q sub-dictionaries. The P sub-dictionaries are selected by the first device from the quantization dictionary table stored in the first device, the quantization dictionary table includes at least P sub-dictionaries, and the Q sub-dictionaries are obtained by the first device by performing quantization dictionary training. 0≤P≤M, 0≤Q≤M, P+Q=M, and P and Q are integers.

It should be understood that when P=0, it indicates that all the M sub-dictionaries included in the first quantization dictionary are obtained by the first device through quantization dictionary training. When Q=0, it indicates that all the M sub-dictionaries included in the first quantization dictionary are selected by the first device from the quantization dictionary table. When P>0 and Q>0, it indicates that P sub-dictionaries in the M sub-dictionaries included in the first quantization dictionary are selected from the candidate sub-dictionaries in the quantization dictionary table, and remaining Q sub-dictionaries are obtained by the first device through training.

After obtaining the first quantization dictionary through update, the first device needs to send the first quantization dictionary to the second device. According to the foregoing description of the format of the quantization dictionary, transmission of a complete quantization dictionary includes transmission of a dictionary usage manner and transmission of dictionary content of the quantization dictionary. Because the dictionary content is usually large and transmission overheads needed are also large, after the dictionary is updated, a number of times of transmitting the complete dictionary should be reduced as much as possible.

Based on the representation format of the quantization dictionary defined in this specification, the quantization dictionary may be updated in the following several scenarios. In different scenarios, different manners of transmitting an updated quantization dictionary may be used, to reduce transmission overheads.
(1) The dictionary usage manner of the quantization dictionary is updated, but the dictionary content of the quantization dictionary is not updated.

For example, in an AI model deployment phase, a plurality of sub-dictionaries may be deployed on the first device and the second device. The plurality of sub-dictionaries may be used to adapt to quantization requirements in different scenarios, or adapt to quantization requirements of different quantization parts of the to-be-quantized information. When the scenario changes and the AI model/quantization dictionary needs to be updated, the first device may select, from a plurality of existing sub-dictionaries, a sub-dictionary that is more suitable for a current scenario for quantization or dequantization processing. For example, a plurality of sub-dictionaries are deployed on the first device and the second device to respectively meet quantization requirements of a low-speed scenario and a high-speed scenario. When a user speed changes, only the dictionary usage manner of the quantization dictionary needs to be updated. In this scenario, the first device does not need to transmit dictionary content of the updated quantization dictionary, but only needs to transmit an updated part in a dictionary usage manner of the updated quantization dictionary.

In an example, sub-dictionaries Y1, Y2, Y3, and Y4 are deployed on the first device and the second device. It is assumed that the second quantization dictionary before update is shown in Table 6, and the first quantization dictionary after update is shown in Table 7.

**Table 6**

| Quantization part of the to-be-quantized information | Identifier of a sub-dictionary |
|---|---|
| Quantization part 1 | Y1 |
| Quantization part 2 | Y2 |
| Quantization part 3 | Y3 |

**Table 7**

| Quantization part of the to-be-quantized information | Identifier of a sub-dictionary |
|---|---|
| Quantization part 1 | Y1 |
| Quantization part 2 | Y3 |
| Quantization part 3 | Y4 |

It can be learned that in this scenario, update of the quantization dictionary may only be update of the dictionary usage manner, or in other words, a correspondence between a quantization part of the to-be-quantized information and a sub-dictionary is updated. Optionally, in comparison with a correspondence indicated by using a dictionary usage manner of the second quantization dictionary, a correspondence indicated by using a dictionary usage manner of the first quantization dictionary may be partially changed, or may be completely changed. This is not limited. An example in which a correspondence partially changes is used in Table 7. For example, a correspondence between the quantization part 1 and the sub-dictionary Y1 does not change, and only correspondences between the quantization part 2 and the quantization part 3 and sub-dictionaries change. However, because Y3 and Y4 are existing sub-dictionaries stored in the quantization dictionary table, the update of the quantization dictionary may only be the update of the dictionary usage manner. The first device may indicate an updated part of the quantization dictionary to the second device. In an example, the first device sends a first message to the second device. The first message indicates an updated part of the first quantization dictionary compared with the second quantization dictionary. Table 6 and Table 7 are used as an example. The first message indicates a correspondence between the quantization part 2 and the sub-dictionary Y3, and a correspondence between the quantization part 3 and the sub-dictionary Y4. For example, the first message includes the identifier of the sub-dictionary Y3 and the quantization part 2, and the identifier of the sub-dictionary Y4 and the quantization part 3. The identifier of Y3 corresponds to the quantization part 2, and the identifier of Y4 corresponds to the quantization part 3.

In another example, quantization dictionary tables of the first device and the second device store sub-dictionaries Y1, Y2, Y3, Y4, and Y5. It is assumed that the second quantization dictionary before update is shown in Table 6, and the first quantization dictionary after update is shown in Table 8.

**Table 8**

| Quantization part of the to-be-quantized information | Identifier of a sub-dictionary |
|---|---|
| Quantization part 1 | Y1 |
| Quantization part 2 | Y3 |
| Quantization part 3 | Y4 |
| Quantization part 4 | Y5 |

In this case, the dictionary usage manner of the quantization dictionary is updated. Specifically, correspondences between three quantization parts (the quantization part 1, the quantization part 2, and the quantization part 3) and three sub-dictionaries (Y1, Y2, Y3) indicated by using the second quantization dictionary are updated to correspondences between four quantization parts (the quantization part 1 to the quantization part 4) and four sub-dictionaries (Y1, Y2, Y3, Y4). It can be learned that when the dictionary usage manner is updated, the to-be-quantized information is re-divided into a plurality of quantization parts, and a quantity of the quantization parts increases. In this example, the first message may include identifiers of Y1, Y3, Y4, and Y5, and quantization parts respectively corresponding to Y1, Y3, Y4, and Y5.

(2) The dictionary usage manner of the quantization dictionary is not updated, but the dictionary content of the quantization dictionary is updated.

In some cases, when the application scenario changes, and an AI model or the quantization dictionary needs to be updated, if the existing sub-dictionary stored in the quantization dictionary table cannot adapt to a current application scenario, the first device needs to retrain the quantization dictionary. It should be understood that the existing sub-dictionary cannot adapt to the current application scenario, indicating that neither a sub-dictionary used before update nor a sub-dictionary in the quantization dictionary table is applicable to the current application scenario, and the first device needs to obtain a new quantization dictionary through retraining.

In an example, a training manner or an update manner of the quantization dictionary is updating the quantization dictionary by using a cluster method. FIG. 4 is a diagram of updating a quantization dictionary by using a cluster method. The quantization dictionary shown in Table 5 is used as an example. The quantization dictionary includes four sub-dictionaries, and four equal-length quantization parts are obtained by dividing a real number vector (an example of the to-be-quantized information) whose length K is 8. For a quantization part [0, 2), it is assumed that value distribution of the quantization part [0, 2) in the to-be-quantized information is shown in a left figure of FIG. 4. If two bits (B=2) are used to quantize the quantization part, value space of the quantization part may be divided into 2^{B}=4 blocks, and a central location of value distribution in each block is used as a dictionary element, to obtain a right figure in FIG. 4. In this way, a value of the dictionary element in the sub-dictionary may be closely approximate to the to-be-quantized information. Only one quantization part of the to-be-quantized information is used as an example for description here. Update of sub-dictionaries corresponding to the remaining three quantization parts is similar, and details are not described again.

Therefore, when the dictionary usage manner of the quantization dictionary remains unchanged, the dictionary element may be updated based on distribution of the to-be-quantized information. Updating the dictionary element based on the distribution of the to-be-quantized information here is merely an implementation of updating the dictionary content. If value distribution of only some quantization parts in the to-be-quantized information changes, only dictionary content of a sub-dictionary corresponding to the quantization parts whose value distribution changes may be updated.

(3) The dictionary usage manner of the quantization dictionary is updated, and the dictionary content is also updated.

When the application scenario changes, and an AI model and/or the quantization dictionary are/is updated, if all existing sub-dictionaries in the quantization dictionary table cannot adapt to the new application scenario, the quantization dictionary may be retrained.

In this case, when the quantization dictionary is updated, both the update of the dictionary usage manner and the update of the dictionary content of the quantization dictionary may be considered. Optionally, the update of the dictionary usage manner may include re-division of quantization parts and update of an identifier of a sub-dictionary corresponding to each quantization dictionary.

In implementation 1, the first device selects a sub-dictionary from the quantization dictionary table, and/or the first device performs dictionary retraining to obtain a new sub-dictionary, to obtain the M sub-dictionaries included in the first quantization dictionary obtained through update, so as to update the quantization dictionary.

When the first device updates the quantization dictionary, optionally, before the update, the first device sends first information to the second device. The first information indicates that the first device updates the quantization dictionary. After obtaining the first quantization dictionary through update, the first device sends the first quantization dictionary to the second device. Optionally, in another implementation, the first device and the second device may agree on that the quantization dictionary is updated by the first device or the second device. In this implementation, before the quantization dictionary is updated, the first device and the second device do not need to exchange information about who updates the quantization dictionary, but directly send the updated quantization dictionary to the other party after the agreed party completes the quantization dictionary update.

The foregoing describes a plurality of possibilities of updating the quantization dictionary. After the update is completed, when the first device sends the first quantization dictionary to the second device, the first device sends, to the second device, the updated part of the first quantization dictionary compared with the second quantization dictionary. Specifically, the updated part is sent in a form of a dictionary usage manner or dictionary content. For example, the first device sends a first message to the second device. The first message indicates the updated part. Optionally, there may be one or more first messages. This is not limited.

For example, the first quantization dictionary includes M sub-dictionaries. If the update of the quantization dictionary is only update of the dictionary usage manner, the updated part includes a correspondence between L quantization parts in the R quantization parts and sub-dictionaries. 1≤L≤R, and L is an integer. When the first device notifies the second device of the updated part, for example, the first device sends the first message to the second device. The first message indicates the L quantization parts and the correspondence between the L quantization parts and the sub-dictionaries. It should be understood that the L quantization parts are quantization parts whose correspondence with the sub-dictionary changes.

If the update of the quantization dictionary is only update of the dictionary content, the updated part includes dictionary content of sub-dictionaries corresponding to Z quantization parts in the R quantization parts. 1≤Z≤R, and Z is an integer. When the first device notifies the second device of the updated part, the first device sends the first message to the second device. The first message indicates identifiers of the Z sub-dictionaries, and updated dictionary elements and indexes of the Z sub-dictionaries. The Z quantization parts are quantization parts whose dictionary content of a corresponding sub-dictionary changes.

Therefore, when receiving the first quantization dictionary from the first device, the second device may specifically receive the dictionary usage manner and the dictionary content of the first quantization dictionary, which are an updated dictionary usage manner and updated dictionary content, so that the second quantization dictionary is synchronously updated to the first quantization dictionary based on the second quantization dictionary.

Optionally, after obtaining the first quantization dictionary, the second device sends second information to the first device. The second information is used to request to enable the first quantization dictionary. After receiving the second information, the first device sends third information to the second device. The third information indicates to enable the first quantization dictionary. Optionally, the third information may carry a time interval T. If a time error between a moment at which the first device sends the third information and a moment at which the second device receives the third information is ignored, the first device enables the first quantization dictionary after the time interval T from the moment at which the third information is sent, and the second device starts to enable a new quantization dictionary, that is, the first quantization dictionary, after the time interval T from the moment at which the third information is received. Optionally, the time interval T may also be agreed on in a protocol. By default, after the time interval T from the moment at which the second device receives the third information, both parties enable a new quantization dictionary.

In addition, optionally, in a process of receiving the new quantization dictionary from the first device, the second device parses the received first quantization dictionary according to a representation format of the quantization dictionary, and determines whether the received first quantization dictionary is complete, to be specific, both the dictionary content and the dictionary usage manner of the first quantization dictionary are intact. If it is determined that the received first quantization dictionary has a defect part, the second device may send fourth information to the first device. The fourth information indicates the first device to resend the defect part. After receiving the defect part re-sent by the first device, the second device may obtain a complete first quantization dictionary.

### Implementation 2

The first device receives the first quantization dictionary from a second device.

Optionally, in implementation 2, the first quantization dictionary may be initially generated by the second device, or may be obtained by updating the second quantization dictionary. After the second device obtains the first quantization dictionary, the second device sends the first quantization dictionary to the first device.

The foregoing describes in detail a process in which the first device updates the quantization dictionary and a process in which the first device sends the new quantization dictionary to the second device after the first device obtains the new quantization dictionary through update. It may be understood that, in implementation 2 in which the second device updates the quantization dictionary, processing or an operation performed by the second device may be considered to be the same as processing or an operation performed by the first device in implementation 1. To avoid repetition, details are not described again.

Optionally, in implementation 2, before updating the quantization dictionary, the second device sends fifth information to the first device. The fifth information indicates that the second device updates the quantization dictionary. Similarly, after the first device obtains the new quantization dictionary from the second device, the first device sends sixth information to the second device. The sixth information indicates that the new quantization dictionary is requested to be enabled. Subsequently, the second device sends seventh information to the first device based on the sixth information. The seventh information indicates to enable the new quantization dictionary. Optionally, if a time error between a moment at which the second device sends the seventh information and a moment at which the first device receives the seventh information is considered, the first device enables the new quantization dictionary after a time interval T1 by default from the moment at which the seventh information is received, and the second device enables the new quantization dictionary after a time interval T2 by default from the moment at which the seventh information is sent. It should be understood that, considering that there is a time difference between the moment at which the second device sends the seventh information and the moment at which the first device receives the seventh information, to ensure that the first device and the second device synchronously enable the new quantization dictionary, the first device and the second device enable the new quantization dictionary after different time intervals. In an example, the foregoing time difference may be considered in a design of T1 and T2, so that the first device and the second device enable the new quantization dictionary at a same moment. Alternatively, the second device indicates the time interval T1 in the seventh information, so that the first device determines, based on the moment at which the seventh information is received and the time interval T1, a moment for enabling the new quantization dictionary.

Optionally, in implementation 2 in which the first device receives the new quantization dictionary from the second device, after the first device receives the first quantization dictionary and before the first device sends the sixth information used to request to enable the first quantization dictionary, the first device may evaluate quantization performance of the first quantization dictionary.

In an example, the first device inputs pre-stored channel information of a test set to an encoder, quantizes output information of the encoder by using the first quantization dictionary, and calculates a quantization error, to evaluate quantization performance of the first quantization dictionary. If the quantization performance meets a quantization requirement, for example, the quantization error is less than or equal to a threshold, it is considered that the quantization requirement is met, and the first device sends the sixth information to the second device, to request to enable the first quantization dictionary.

Optionally, in an example, in implementation 2, the first device may further update an encoder (the first device is UE, and the second device is an access network device) or a decoder (the first device is an access network device, and the second device is UE) based on the new quantization dictionary. For example, the first device is an access network device. If the access network device determines that the decoder does not match the first quantization dictionary obtained from the UE, the access network device updates the decoder based on the first quantization dictionary, for example, updates a parameter of the decoder. For example, the access network device inputs the quantization information in the quantization dictionary into the decoder as a candidate, to obtain output information, calculates a difference between probability distribution of the output information and probability distribution of channel information in the training set, for example, mutual information, and updates the decoder by using the difference as a loss function. For example, the first device is UE. If the UE determines that an output of the encoder does not match the first quantization dictionary obtained from the access network device, the UE updates the encoder based on the first quantization dictionary, for example, updates a parameter of the encoder. The UE uses a training set, inputs channel data in the training set to the encoder to obtain an output, and quantizes the output of the encoder by using a new dictionary, to obtain an average quantization error on the training set through calculation, and the average quantization error is used as a loss function. The loss function is a function of a weight of the encoder, which is an AI model. If the loss function is less than a threshold, the training is stopped, otherwise the weight of the encoder is updated to reduce the loss function, for example, a gradient of the loss function, which is a quantization error, with respect to the encoder weight, is calculated, and the encoder is updated by using a gradient descent method. The weight of the encoder may include a weight of each neuron in a neural network when the encoder is implemented by the neural network.

320: The first device quantizes the to-be-quantized information by using the first quantization dictionary, or the first device dequantizes, by using the first quantization dictionary, received information obtained by quantizing the R quantization parts.

Through step 310, the first device obtains the first quantization dictionary. Then, the first device performs quantization by using the first quantization dictionary, or performs dequantization by using the first quantization dictionary. For example, the information that is obtained by quantizing the R quantization parts and that is received by the first device may be R quantization indexes.

In an example, in a scenario in which UE reports CSI to a network side, for a terminal device that reports the CSI to the network side, the first quantization dictionary is used to quantize compressed information of the CSI, and then the UE reports quantized information to the network side. Specifically, the quantized information is an index of quantization information corresponding to the compressed information in a corresponding sub-dictionary (for example, a quantization index for short). For the network side, the network side receives the index of the quantization information (that is, the quantization index) reported by the terminal device, determines information corresponding to the index based on the first quantization dictionary, restores quantization information corresponding to the compressed information of the CSI, decodes the compressed information, and finally obtains channel information. Therefore, in an example, if the first device is UE, the UE quantizes compressed information of the channel information by using the first quantization dictionary. If the first device is an access network device, the access network device dequantizes the received quantized information, for example, an index corresponding to the quantization information, by using the first quantization dictionary, to restore the compressed information of the channel information.

In addition, it may be understood that, in a process of updating the quantization dictionary and before the new first quantization dictionary is enabled, the first device continues to use the second quantization dictionary to quantize the to-be-quantized information, and the second device continues to use the second quantization dictionary to dequantize the received quantized information, for example, the index corresponding to the quantization information.

For example, if the first device is an access network device, before the first quantization dictionary is enabled, the access network device receives first quantized information from the UE, and the access network device dequantizes the first quantized information by using the second quantization dictionary. After the first quantization dictionary is enabled, if the access network device receives second quantized information from the UE, the access network device dequantizes the second quantized information by using the first quantization dictionary.

If the first device is UE, before the first quantization dictionary is enabled, if the UE needs to feed back first channel information to the access network device, the UE quantizes the first channel information by using the second quantization dictionary, and sends quantized information of the first channel information. After the first quantization dictionary is enabled, if the UE needs to feed back second channel information to the access network device, the UE quantizes the second channel information by using the first quantization dictionary, and sends quantized information of the second channel information.

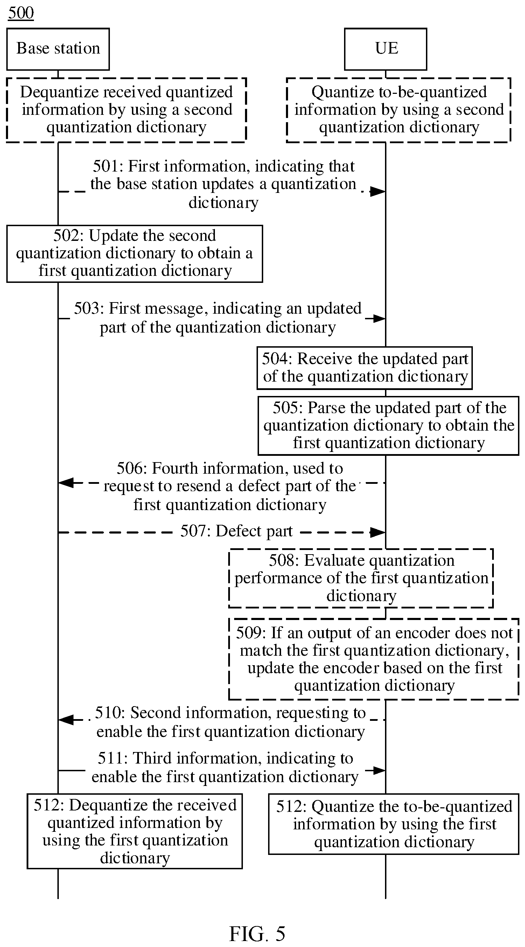

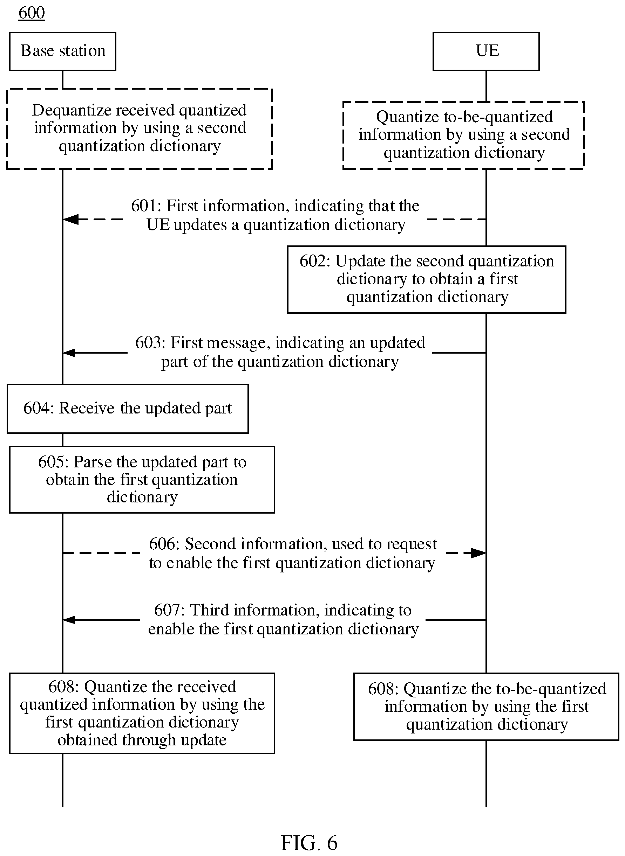

The foregoing describes in detail the representation format of the quantization dictionary provided in this application and a process in which a device obtains the quantization dictionary. The following provides two examples of a process of updating a quantization dictionary with reference to FIG. 5 and FIG. 6. It should be noted that FIG. 5 and FIG. 6 are intended to provide a complete example description of a procedure or a mechanism for updating a quantization dictionary. For detailed descriptions of related information or steps, refer to the foregoing related descriptions. Details are not described in this example.

In the following example of updating a quantization dictionary, it is assumed that a quantization dictionary initially used or previously used by a base station and UE is a second quantization dictionary.

FIG. 5 is an example of a quantization method according to this application.

501: Optionally, a base station sends first information to UE, where the first information indicates that the base station updates a quantization dictionary.

502: The base station updates a second quantization dictionary to obtain a first quantization dictionary.

503: The base station sends a first message to the UE, where the first message indicates an updated part of the quantization dictionary.

504: The UE receives the updated part of the quantization dictionary.

505: The UE parses the updated part of the quantization dictionary to obtain the first quantization dictionary.

506: Optionally, according to a representation format of the quantization dictionary, if the UE determines that the received first quantization dictionary has a defect part, the UE sends fourth information to the base station, where the fourth information is used to request the base station to resend the defect part of the first quantization dictionary.

507: Optionally, the base station resends the defect part to the UE.

After receiving the defect part, the UE obtains a complete first quantization dictionary.

It should be understood that step 506 and step 507 are mutually associated steps, and the method 500 includes both step 506 and step 507, or does not include step 506 and step 507.

508: Optionally, the UE evaluates quantization performance of the first quantization dictionary.

After evaluating the quantization performance of the first quantization dictionary, if a quantization requirement is met, the UE may request to enable the first quantization dictionary, as shown in step 510.

Optionally, before requesting to enable the first quantization dictionary, the UE may alternatively test a matching degree between the first quantization dictionary and an encoder, and update the encoder based on the first quantization dictionary, as shown in step 509.

509: Optionally, if it is determined that an output of the encoder does not match the first quantization dictionary, the UE updates the encoder based on the first quantization dictionary.

510: Optionally, the UE sends second information to the base station, where the second information is used to request to enable the first quantization dictionary.

The base station receives the second information from the UE.

511: The base station sends third information to the UE, where the third information indicates to enable the first quantization dictionary.

The UE receives the third information from the base station.

512: After the first quantization dictionary is enabled, the base station dequantizes received quantized information by using the first quantization dictionary, and the UE quantizes to-be-quantized information by using the first quantization dictionary.

Optionally, in an example, information that needs to be quantized on a UE side may be CSI or other information that needs to be reported to the base station. This is not limited.

The procedure shown in FIG. 5 is an example of updating the quantization dictionary by the base station. The following further provides an example of a procedure of updating the quantization dictionary by the UE, as shown in FIG. 6.

FIG. 6 is an example of a quantization method according to this application.

601: Optionally, UE sends first information to a base station, where the first information indicates that the UE updates a quantization dictionary.

602: The UE updates a second quantization dictionary to obtain a first quantization dictionary.

603: The UE sends a first message to the base station, where the first message indicates an updated part of the first quantization dictionary compared with the second quantization dictionary.

604: The base station receives the updated part.

605: The base station parses the updated part to obtain the first quantization dictionary.

Optionally, if the base station determines that the first quantization dictionary has a defect part, the base station may request the UE to resend the defect part. After receiving the defect part, the base station obtains a complete first quantization dictionary.

Optionally, the base station may evaluate quantization performance of the first quantization dictionary, and when the evaluation is completed and a quantization requirement is met, the base station requests the UE to enable the first quantization dictionary, as shown in step 606.

Optionally, before requesting to enable the first quantization dictionary, the base station may alternatively determine a degree of matching between a decoder and the first quantization dictionary. If the decoder does not match the first quantization dictionary, the base station updates the decoder based on the first quantization dictionary, for example, updates a parameter of the decoder.

606: Optionally, the base station sends second information to the UE, where the second information is used to request to enable the first quantization dictionary.

The UE receives the second information. The UE sends third information to the base station in response to the second information.

607: Optionally, the base station receives the third information from the UE, where the third information indicates to enable the first quantization dictionary.

608: After the first quantization dictionary is enabled, the base station dequantizes received quantized information by using the first quantization dictionary, and the UE quantizes to-be-quantized information by using the first quantization dictionary.

The foregoing is described by using an example in which one of a quantization device (for example, the first device) and a dequantization device (for example, the second device) performs initial generation and/or update of the quantization dictionary. It may be understood that the initially generated quantization dictionary or the updated quantization dictionary may alternatively be provided by a third device other than the quantization device or the dequantization device. For example, the quantization device and the dequantization device both receive all or a part of the updated quantization dictionary or the initially generated quantization dictionary from the third device, the quantization device receives all or a part of the updated quantization dictionary or the initially generated quantization dictionary from the third device, and sends all or a part of the updated quantization dictionary or the initially generated quantization dictionary to the dequantization device, or the dequantization device receives all or a part of the updated quantization dictionary or the initially generated quantization dictionary from the third device, and sends all or a part of the updated quantization dictionary or the initially generated quantization dictionary to the quantization device. For example, the third device may be an OTT server (over-the-top server).

The foregoing describes in detail the quantization method provided in this application. The following describes a quantization or dequantization apparatus provided in this application.

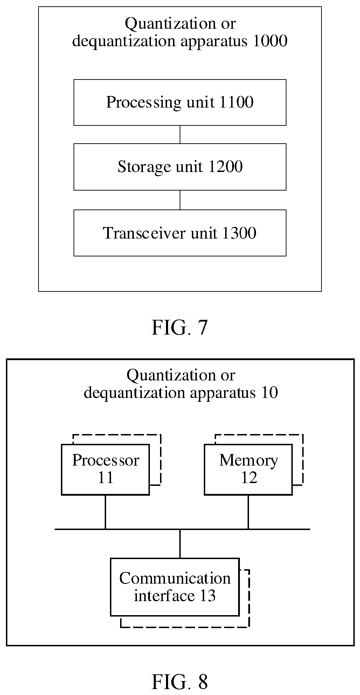

FIG. 7 is a schematic block diagram of a quantization or dequantization apparatus according to this application. As shown in FIG. 7, the apparatus 1000 includes a processing unit 1100, a storage unit 1200, and a transceiver unit 1300.

The processing unit 1100 is configured to:
obtain a first quantization dictionary;
quantize to-be-quantized information by using the first quantization dictionary, where the first quantization dictionary includes M sub-dictionaries, the M sub-dictionaries are used to quantize R quantization parts of the to-be-quantized information, and both M and R are positive integers greater than 1, or
dequantize, by using the first quantization dictionary, received information obtained by quantizing R quantization parts, where the dequantized information is used as an input of a decoder, the first quantization dictionary includes M sub-dictionaries, the M sub-dictionaries are used to dequantize the received information obtained by quantizing the R quantization parts, and both M and R are positive integers greater than 1,
the first quantization dictionary includes a dictionary usage manner and respective dictionary content of the M sub-dictionaries, the dictionary usage manner indicates a correspondence between the M sub-dictionaries and the R quantization parts, a first sub-dictionary in the M sub-dictionaries corresponds to a first quantization part in the R quantization parts, and the first sub-dictionary is used to quantize the first quantization part, or the first sub-dictionary is used to dequantize information obtained by quantizing the first quantization part, dictionary content of each sub-dictionary in the M sub-dictionaries includes at least one dictionary element, each dictionary element included in the first sub-dictionary in the M sub-dictionaries is a candidate of quantization information of the first quantization part, and M is a positive integer; and
perform channel information quantization or restoration processing by using the first quantization dictionary.

Optionally, in an embodiment, each dictionary element included in the first sub-dictionary corresponds to one piece of quantization information and one index; and
that each dictionary element included in the first sub-dictionary is a candidate of quantization information of the first quantization part includes:
the quantization information corresponding to each dictionary element included in the first sub-dictionary is a candidate of the quantization information of the first quantization part.

Optionally, in an embodiment, the processing unit 1100 is configured to update a second quantization dictionary to obtain the first quantization dictionary.

The transceiver unit 1300 is further configured to send all or a part of the first quantization dictionary to a second device.

Optionally, in an embodiment, the M sub-dictionaries include P sub-dictionaries and Q sub-dictionaries.

The P sub-dictionaries are selected by the first device from a quantization dictionary table stored in the first device, and the quantization dictionary table includes at least P candidate sub-dictionaries.

The Q sub-dictionaries are obtained by the first device through dictionary training.

0≤P≤M, 0≤Q≤M, P+Q=M, and P and Q are integers.

Optionally, in an embodiment, the transceiver unit 1300 is configured to:
send a first message to the second device, where the first message indicates an updated part of the first quantization dictionary compared with the second quantization dictionary.

Optionally, in an embodiment, the updated part includes a correspondence between L quantization parts in the R quantization parts and sub-dictionaries, where 1≤L≤R, and L is an integer; and/or
dictionary content of sub-dictionaries corresponding to Z quantization parts in the R quantization parts, where 1≤Z≤R, and Z is an integer.

Optionally, in an embodiment, if the updated part includes the correspondence between the L quantization parts in the R quantization parts and the sub-dictionaries, the first message indicates the L quantization parts and identifiers of the sub-dictionaries respectively corresponding to the L quantization parts; and/or
if the updated part includes the dictionary content of the sub-dictionaries corresponding to the Z quantization parts in the R quantization parts, the first message indicates identifiers of the Z sub-dictionaries, and updated dictionary elements and indexes of the Z sub-dictionaries.

Optionally, in an embodiment, the transceiver unit 1300 is further configured to:
send first information to the second device, where the first information indicates that the first device updates the second quantization dictionary.

Optionally, in an embodiment, the transceiver unit 1300 is further configured to:
receive second information from the second device, where the second information is used to request to enable the first quantization dictionary.

Optionally, in an embodiment, the transceiver unit 1300 is further configured to:
send third information to the second device, where the third information indicates to enable the first quantization dictionary.

Optionally, in an embodiment, the processing unit 1100 is configured to:
after a time interval T from a moment at which the third information is sent, enable the first quantization dictionary to quantize the to-be-quantized information, where the time interval T is agreed on based on a protocol or indicated by using the third information,
   or
after a time interval T from a moment at which the third information is sent, enable the first quantization dictionary to dequantize the received information obtained by quantizing the R quantization parts, where the time interval T is agreed on based on a protocol or indicated by using the third information.

Optionally, in an embodiment, the transceiver unit 1300 is configured to receive a dictionary usage manner and dictionary content of the first quantization dictionary from the second device.

The processing unit 1100 is configured to receive all or a part of the first quantization dictionary from the second device.

Optionally, in an embodiment, the transceiver unit 1300 is configured to:
receive a second message from the second device, where the second message indicates an updated part of the first quantization dictionary compared with a second quantization dictionary, and the first quantization dictionary is obtained by updating the second quantization dictionary by the second device.

Optionally, in an embodiment, the updated part includes:
a correspondence between L quantization parts in the R quantization parts and sub-dictionaries, where 1≤L≤R, and L is an integer; and/or
dictionary content of sub-dictionaries corresponding to Z quantization parts in the R quantization parts, where 1≤Z≤R, and Z is an integer.

Optionally, in an embodiment, if the updated part includes the correspondence between the L quantization parts in the R quantization parts and the sub-dictionaries, the second message indicates the L quantization parts and identifiers of the sub-dictionaries respectively corresponding to the L quantization parts; and/or
if the updated part includes the dictionary content of the sub-dictionaries corresponding to the Z quantization parts in the R quantization parts, the second message indicates identifiers of the Z sub-dictionaries, and updated dictionary elements and indexes of the Z sub-dictionaries.

Optionally, in an embodiment, the processing unit 1100 is configured to determine that the obtained first quantization dictionary has a defect.

The transceiver unit 1300 is configured to:
send fourth information to the second device, where the fourth information indicates the second device to send a defect part of the first quantization dictionary, and the defect part includes a defect of the dictionary usage manner and/or a defect of the dictionary content of the first quantization dictionary; and
receive the defect part from the second device.

Optionally, in an embodiment, the transceiver unit 1300 is configured to receive fifth information from the second device, where the fifth information indicates that the second device updates a quantization dictionary.

Optionally, in an embodiment, the transceiver unit 1300 is further configured to:
send sixth information to the second device, where the sixth information is used to request to enable the first quantization dictionary.

Optionally, in an embodiment, the transceiver unit 1300 is further configured to:
receive seventh information from the second device, where the seventh information indicates to enable the first quantization dictionary.

Optionally, in an embodiment, the processing unit 1100 is configured to:
after a time interval T from a moment at which the transceiver unit 1300 receives the seventh information, enable the first quantization dictionary to quantize the to-be-quantized information, where the time interval T is agreed on based on a protocol or indicated by using the seventh information;
   or
after a time interval T from a moment at which the transceiver unit 1300 receives the seventh information, enable the first quantization dictionary to dequantize the received information obtained by quantizing the R quantization parts, where the time interval T is agreed on based on a protocol or indicated by using the seventh information.

Optionally, in an embodiment, the apparatus is an access network device or a chip (or a chip system) configured in the access network device, the second device is a terminal device, the to-be-quantized information is output information of an encoder, and the first quantization dictionary is used by the apparatus to dequantize the received information obtained by quantizing the R quantization parts, to obtain an input of a decoder.

The processing unit 1100 is configured to:
evaluate quantization performance of the first quantization dictionary; and
if it is determined that the decoder of the apparatus does not match the first quantization dictionary, update the decoder based on the first quantization dictionary.

Optionally, in an embodiment, the apparatus is an access network device or a chip (or a chip system) configured in the access network device.

The transceiver unit 1300 is configured to receive first quantized information from the second device.

The processing unit 1100 is configured to dequantize the first quantized information based on the first quantized information and the second quantization dictionary.

Optionally, in an embodiment, the apparatus is an access network device or a chip (or a chip system) configured in the access network device.

The transceiver unit 1300 is configured to receive second quantized information from the second device.

The processing unit 1100 is configured to dequantize the second quantized information based on the second quantized information and the first quantization dictionary.

Optionally, in an embodiment, the apparatus is a terminal device or a chip (or a chip system) configured in the terminal device, the second device is an access network device, the to-be-quantized information is output information of an encoder, and the first quantization dictionary is used by the apparatus to quantize the output information of the encoder.

The processing unit 1100 is configured to:
evaluate quantization performance of the first quantization dictionary; and
if it is determined that an output of the encoder of the apparatus does not match the first quantization dictionary, update the encoder based on the first quantization dictionary.

Optionally, in an embodiment, the apparatus is a terminal device or a chip (or a chip system) configured in the terminal device.

The processing unit 1100 is configured to determine to-be-fed-back quantized information of first channel information based on the second quantization dictionary.

The transceiver unit 1300 is configured to send the quantized information of the first channel information to the second device.

Optionally, in an embodiment, the apparatus is a terminal device or a chip (or a chip system) configured in the terminal device.

The processing unit 1100 is configured to determine to-be-fed-back quantized information of second channel information based on the first quantization dictionary.

The transceiver unit 1300 is configured to send the quantized information of the second channel information to the second device.

Optionally, in an embodiment, if the apparatus is a terminal device or a chip or a chip system configured in the terminal device, the to-be-quantized information is output information of an encoder, and the processing unit 1100 is specifically configured to quantize the output information of the encoder by using the first quantization dictionary.

Alternatively, if the apparatus is an access network device or a chip or a chip system configured in the access network device, the processing unit 1100 is specifically configured to dequantize, by using the first quantization dictionary, the received information obtained by quantizing the R quantization parts.

In the foregoing apparatus embodiments, the processing unit 1100 is configured to perform processing and/or an operation implemented inside the first device in addition to sending and receiving actions. The transceiver unit 1300 is configured to perform a receiving or sending action of the first device. The storage unit 1200 is configured to store information such as a quantization dictionary and a quantization dictionary table.

For example, in FIG. 3, the processing unit 1100 is configured to perform quantization dictionary update processing, to obtain a first quantization dictionary. Alternatively, the transceiver unit 1300 is configured to perform an operation of receiving a first quantization dictionary from a second device, to obtain the first quantization dictionary. The processing unit 1100 is further configured to perform step 320.

For another example, in FIG. 5, the transceiver unit 1300 is configured to perform step 501, step 503, step 506 and step 507, and step 510 and step 511 that are performed by a base station. The processing unit 1100 is configured to perform step 502, step 512 that is performed by the base station, and the like. In FIG. 6, the transceiver unit 1300 is configured to perform step 601, step 603, and step 606 and step 607 that are performed by UE. The processing unit 1100 is configured to perform step 602 and step 608 that is performed by the UE.

In this application, unit (or module) division is an example, and is merely logical function division. In actual implementation, there may be another division manner. In addition, functional units in the examples of the present disclosure may be integrated into one processor, or may exist alone physically, or two or more units are integrated into one unit. The integrated unit may be implemented in a form of hardware, or may be implemented in a form of a software functional module.

Based on a same technical concept, this application further provides a quantization or dequantization apparatus, as shown in FIG. 8.

FIG. 8 is a diagram of a structure of a quantization or dequantization apparatus according to this application. As shown in FIG. 8, the apparatus 10 includes one or more processors 11, one or more memories 12, and one or more communication interfaces 13. The processor 11 is configured to control the communication interface 13 to receive and send a signal, the memory 12 is configured to store a computer program, and the processor 11 is configured to invoke and run the computer program in the memory 12, to enable the apparatus 10 to perform processing performed by the first device in the method embodiments of this application.

For example, the processor 11 may have a function of the processing unit 1100 shown in FIG. 7, the memory 12 may have a function of the storage unit 1200, and the communication interface 13 may have a function of the transceiver unit 1300. Specifically, the processor 11 may be configured to perform processing or an operation performed inside the apparatus, the memory may be configured to perform an operation of caching and deleting an information unit from a cache, and the communication interface 13 is configured to perform a sending and/or receiving operation of the apparatus.

In a possible implementation, the apparatus 10 may be used in an access network device. Specifically, the apparatus 10 may be the access network device, or may be an apparatus that can support the access network device in implementing functions of the access network device in any one of the foregoing examples.

For example, the apparatus 10 may be the first device in the method embodiments. In this implementation, the communication interface 13 may be a transceiver of the first device. The transceiver may include a receiver and/or a transmitter. Optionally, the processor 11 may be a baseband apparatus of the first device, and the communication interface 13 may be a radio frequency apparatus.

For example, the apparatus 10 may be a chip (or a chip system) installed in the first device. In this implementation, the communication interface 13 may be an interface circuit or an input/output interface.

In FIG. 8, a dashed box behind a device (for example, the processor, the memory, or the communication interface) indicates that there may be one or more devices.

Optionally, the memory and the processor in the foregoing apparatus embodiments may be physically independent units, or the memory and the processor may be integrated together. This is not limited in this specification.

In addition, this application further provides a computer-readable storage medium. The computer-readable storage medium stores computer instructions. When the computer instructions are run on a computer, an operation and/or processing performed by the first device in the method embodiments of this application are/is performed.

In addition, this application further provides a computer program product. The computer program product includes computer program code or instructions. When the computer program code or the instructions are run on a computer, an operation and/or processing performed by the first device in the method embodiments of this application are/is performed.

In addition, this application further provides a chip. The chip includes a processor. A memory configured to store a computer program is disposed independent of the chip. The processor is configured to execute the computer program stored in the memory, to enable an apparatus in which the chip is installed to perform an operation and/or processing performed by the first device in any one of the method embodiments.

Further, the chip may include a communication interface. The communication interface may be an input/output interface, an interface circuit, or the like. Further, the chip may include the memory.

In addition, this application further provides a communication apparatus (for example, may be a chip or a chip system), including a memory, a processor, and a communication interface. The communication interface is configured to receive first information, and send the first information to the processor. The processor is configured to process, based on the first information, a first information element cached in the memory.

In addition, this application further provides a communication apparatus, including at least one processor. The at least one processor is coupled to at least one memory. The at least one processor is configured to execute a computer program or instructions stored in the at least one memory, to enable the communication apparatus to perform an operation and/or processing performed by the first device in any one of the method embodiments.

In addition, this application further provides a wireless communication system, including the first device and the second device in the method embodiments of this application.

At least one (item) in embodiments of this application indicates one or more (items). A plurality of (items) indicates two (items) or more than two (items). The term "and/or" describes an association relationship for describing associated objects and represents that three relationships may exist. For example, A and/or B may represent the following three cases: Only A exists, both A and B exist, and only B exists. The character "/" generally indicates an "or" relationship between the associated objects. In addition, it should be understood that although the terms such as first and second may be used in the present disclosure to describe objects, these objects are not limited by these terms. These terms are merely used to distinguish the objects from each other.

The term "include" and any other variant thereof mentioned in embodiments of this application are intended to cover a non-exclusive inclusion. For example, a process, a method, a system, a product, or a device that includes a series of steps or units is not limited to the listed steps or units, but optionally further includes another unlisted step or unit, or optionally further includes another inherent step or unit of the process, the method, the product, or the device. It should be noted that, in this application, terms such as "example" or "for example" are used for representing giving an example, an illustration, or a description. Any method or design solution described in this application as "example" or "for example" should not be explained as being more preferred or advantageous over another method or design solution. To be precise, use of the expression such as "example" or "for example" is intended to present a relative concept in a specific manner.

The processor mentioned in embodiments of this application may be a central processing unit (central processing unit, CPU), or may be another general-purpose processor, a digital signal processor (digital signal processor, DSP), an application-specific integrated circuit (application specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

The memory in embodiments of this application may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile storage may be a random access memory (random access memory, RAM), and is used as an external cache. By way of example but not limitative description, RAMs in many forms are available, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DRRAM). It should be noted that the memory of the systems and methods described in this specification includes but is not limited to these and any memory of another appropriate type.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus and method may be implemented in another manner. For example, the foregoing apparatus embodiments are merely examples. For example, division of the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or a part of the technical solutions may be implemented in a form of a software product. The computer software product is stored in a storage medium, and includes several instructions for instructing a computer device (which may be a personal computer, a server, a network device, or the like) to perform all or a part of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A quantization method, performed by a first device or a chip used for the first device, wherein the method comprises:
obtaining a first quantization dictionary; and
quantizing to-be-quantized information by using the first quantization dictionary, wherein the first quantization dictionary comprises M sub-dictionaries, the M sub-dictionaries are used to quantize R quantization parts of the to-be-quantized information, and both M and R are positive integers greater than 1; or dequantizing, by using the first quantization dictionary, received information obtained by quantizing R quantization parts, wherein the first quantization dictionary comprises M sub-dictionaries, the M sub-dictionaries are used to dequantize the received information obtained by quantizing the R quantization parts, and both M and R are positive integers greater than 1, and
the first quantization dictionary comprises a dictionary usage manner and respective dictionary content of the M sub-dictionaries, the dictionary usage manner indicates a correspondence between the M sub-dictionaries and the R quantization parts, a first sub-dictionary in the M sub-dictionaries corresponds to a first quantization part in the R quantization parts, and the first sub-dictionary is used to quantize the first quantization part, or the first sub-dictionary is used to dequantize information obtained by quantizing the first quantization part, dictionary content of each sub-dictionary in the M sub-dictionaries comprises at least one dictionary element, and each dictionary element comprised in the first sub-dictionary in the M sub-dictionaries is a candidate of quantization information of the first quantization part.

2. The method according to claim 1, wherein each dictionary element comprised in the first sub-dictionary corresponds to one piece of quantization information and one index; and
that each dictionary element comprised in the first sub-dictionary is a candidate of quantization information of the first quantization part comprises:
the quantization information corresponding to each dictionary element comprised in the first sub-dictionary is a candidate of the quantization information of the first quantization part.

3. The method according to claim 1 or 2, wherein the obtaining a first quantization dictionary comprises:
updating a second quantization dictionary to obtain the first quantization dictionary, and
the method further comprises:
sending all or a part of the first quantization dictionary to a second device.

4. The method according to claim 3, wherein the M sub-dictionaries comprise P sub-dictionaries and Q sub-dictionaries, wherein
the P sub-dictionaries are selected from a stored quantization dictionary table, and the quantization dictionary table comprises at least P candidate sub-dictionaries;
the Q sub-dictionaries are obtained through dictionary training; and
0≤P≤M, 0≤Q≤M, P+Q=M, and P and Q are integers.

5. The method according to claim 3 or 4, wherein the sending a part of the first quantization dictionary to a second device comprises:
sending a first message to the second device, wherein the first message indicates an updated part of the first quantization dictionary compared with the second quantization dictionary, and the first quantization dictionary is obtained based on updating the second quantization dictionary.

6. The method according to claim 5, wherein the updated part comprises:
a correspondence between L quantization parts in the R quantization parts and sub-dictionaries, wherein 1≤L≤R, and L is an integer; and/or
dictionary content of sub-dictionaries corresponding to Z quantization parts in the R quantization parts, wherein 1≤Z≤R, and Z is an integer.

7. The method according to claim 6, wherein if the updated part comprises the correspondence between the L quantization parts in the R quantization parts and the sub-dictionaries, the first message indicates the L quantization parts and identifiers of the sub-dictionaries respectively corresponding to the L quantization parts; and/or
if the updated part comprises the dictionary content of the sub-dictionaries corresponding to the Z quantization parts in the R quantization parts, the first message indicates identifiers of the Z sub-dictionaries, and updated dictionary elements and indexes of the Z sub-dictionaries.

8. The method according to any one of claims 3 to 7, wherein before the obtaining a first quantization dictionary, the method further comprises:
sending first information to the second device, wherein the first information indicates that the first device updates the second quantization dictionary.

9. The method according to any one of claims 3 to 8, wherein after the sending all or a part of the first quantization dictionary to a second device, the method further comprises:
receiving second information from the second device, wherein the second information is used to request to enable the first quantization dictionary.

10. The method according to any one of claims 3 to 9, wherein the method further comprises:
sending third information to the second device, wherein the third information indicates to enable the first quantization dictionary.

11. The method according to claim 10, wherein the quantizing to-be-quantized information by using the first quantization dictionary comprises:
after a time interval T from a moment at which the third information is sent, enabling the first quantization dictionary to quantize the to-be-quantized information, wherein the time interval T is agreed on based on a protocol or indicated by using the third information, or
the dequantizing, by using the first quantization dictionary, received information obtained by quantizing R quantization parts comprises:
after a time interval T from a moment at which the third information is sent, enabling the first quantization dictionary to dequantize the received information obtained by quantizing the R quantization parts, wherein the time interval T is agreed on based on a protocol or indicated to the second device by using the third information.

12. The method according to claim 1 or 2, wherein the obtaining a first quantization dictionary comprises:
receiving all or a part of the first quantization dictionary from a second device; and
parsing the dictionary usage manner and/or the dictionary content of the first quantization dictionary to obtain the first quantization dictionary.

13. The method according to claim 12, wherein the receiving a part of the first quantization dictionary from a second device comprises:
receiving a second message from the second device, wherein the second message indicates an updated part of the first quantization dictionary compared with a second quantization dictionary, and the first quantization dictionary is obtained based on updating the second quantization dictionary.

14. The method according to claim 13, wherein the updated part comprises:
a correspondence between L quantization parts in the R quantization parts and sub-dictionaries, wherein 1≤L≤R, and L is an integer; and/or
dictionary content of sub-dictionaries corresponding to Z quantization parts in the R quantization parts, wherein 1≤Z≤R, and Z is an integer.

15. The method according to claim 14, wherein if the updated part comprises the correspondence between the L quantization parts in the R quantization parts and the sub-dictionaries, the second message indicates the L quantization parts and identifiers of the sub-dictionaries respectively corresponding to the L quantization parts; and/or
if the updated part comprises the dictionary content of the sub-dictionaries corresponding to the Z quantization parts in the R quantization parts, the second message indicates identifiers of the Z sub-dictionaries, and updated dictionary elements and indexes of the Z sub-dictionaries.

16. The method according to any one of claims 12 to 15, wherein the method further comprises:
if it is determined that the obtained first quantization dictionary has a defect, sending fourth information to the second device, wherein the fourth information indicates the second device to send a defect part of the first quantization dictionary, and the defect part comprises a defect of the dictionary usage manner and/or a defect of the dictionary content of the first quantization dictionary; and
receiving the defect part from the second device.

17. The method according to any one of claims 12 to 16, wherein before obtaining all or a part of the first quantization dictionary, the method further comprises:
receiving fifth information from the second device, wherein the fifth information indicates that the second device updates a quantization dictionary.

18. The method according to any one of claims 12 to 17, wherein after obtaining all or a part of the first quantization dictionary, the method further comprises:
sending sixth information to the second device, wherein the sixth information is used to request to enable the first quantization dictionary.

19. The method according to any one of claims 12 to 18, wherein the method further comprises:
receiving seventh information from the second device, wherein the seventh information indicates to enable the first quantization dictionary.

20. The method according to claim 19, wherein the quantizing to-be-quantized information by using the first quantization dictionary comprises:
after a time interval T from a moment at which the seventh information is received, enabling the first quantization dictionary to quantize the to-be-quantized information, wherein the time interval T is agreed on based on a protocol or indicated by using the seventh information, or
the dequantizing, by using the first quantization dictionary, received information obtained by quantizing R quantization parts comprises:
after a time interval T from a moment at which the seventh information is received, enabling the first quantization dictionary to dequantize the received information obtained by quantizing the R quantization parts, wherein the time interval T is agreed on based on a protocol or indicated to the second device by using the seventh information.

21. The method according to any one of claims 12 to 20, wherein the first device is an access network device, the second device is a terminal device, the to-be-quantized information is output information of an encoder, and the first quantization dictionary is used by the first device to dequantize the received information obtained by quantizing the R quantization parts, to obtain an input of a decoder, and
after the obtaining a first quantization dictionary, the method further comprises:
evaluating quantization performance of the first quantization dictionary; and
if it is determined that the decoder of the first device does not match the first quantization dictionary, updating the decoder based on the first quantization dictionary.

22. The method according to claim 21, wherein before enabling the first quantization dictionary, the method further comprises:
receiving first quantized information from the second device; and
dequantizing the first quantized information based on the first quantized information and the second quantization dictionary, wherein the first quantization dictionary is updated based on the second quantization dictionary.

23. The method according to claim 21 or 22, wherein after enabling the first quantization dictionary, the method further comprises:
receiving second quantized information from the second device; and
dequantizing the second quantized information based on the second quantized information and the first quantization dictionary.

24. The method according to any one of claims 12 to 20, wherein the first device is a terminal device, the second device is an access network device, the to-be-quantized information is output information of an encoder, and the first quantization dictionary is used by the first device to quantize the output information of the encoder, and
after the obtaining a first quantization dictionary, the method further comprises:
evaluating quantization performance of the first quantization dictionary; and
if it is determined that an output of the encoder of the first device does not match the first quantization dictionary, updating the encoder based on the first quantization dictionary.

25. The method according to claim 24, wherein before enabling the first quantization dictionary, the method further comprises:
determining to-be-fed-back quantized information of first channel information based on the second quantization dictionary; and
sending the quantized information of the first channel information to the second device.

26. The method according to claim 24 or 25, wherein after enabling the first quantization dictionary, the method further comprises:
determining to-be-fed-back quantized information of second channel information based on the first quantization dictionary; and
sending the quantized information of the second channel information to the second device.

27. The method according to any one of claims 1 to 20, wherein the quantizing to-be-quantized information by using the first quantization dictionary comprises:
if the first device is a terminal device, and the to-be-quantized information is output information of an encoder, quantizing, by the first device, the output information of the encoder by using the first quantization dictionary, or
the dequantizing, by using the first quantization dictionary, received information obtained by quantizing R quantization parts comprises:
if the first device is an access network device, dequantizing, by the first device by using the first quantization dictionary, the received information obtained by quantizing the R quantization parts.

28. A quantization method, performed by a first device or a chip used for the first device, wherein the method comprises:
obtaining a first quantization dictionary;
quantizing first to-be-quantized information by using the first quantization dictionary, or dequantizing, by using the first quantization dictionary, received first quantized information;
obtaining a second quantization dictionary; and
quantizing second to-be-quantized information by using the second quantization dictionary, or dequantizing, by using the second quantization dictionary, received second quantized information, wherein
the first quantization dictionary comprises a plurality of dictionary elements, and each dictionary element comprised in the first quantization dictionary is a candidate of to-be-quantized information generated in a first quantization scenario;
the second quantization dictionary comprises a plurality of dictionary elements, and each dictionary element comprised in the second quantization dictionary is a candidate of to-be-quantized information generated in a second quantization scenario; and
the first quantization dictionary is different from the second quantization dictionary.

29. The method according to claim 28, wherein the first quantization dictionary corresponds to the first quantization scenario, and the second quantization dictionary corresponds to the second quantization scenario.

30. The method according to claim 28 or 29, wherein value distribution of the first to-be-quantized information is different from value distribution of the second to-be-quantized information.

31. The method according to any one of claims 28 to 30, wherein the first quantization dictionary comprises M sub-dictionaries, the M sub-dictionaries are used to separately quantize R quantization parts of the to-be-quantized information or used to dequantize information obtained by separately quantizing R quantization parts, and both M and R are positive integers;
the second quantization dictionary comprises C sub-dictionaries, the C sub-dictionaries are used to separately quantize S quantization parts of the to-be-quantized information or used to dequantize information obtained by separately quantizing S quantization parts, and both S and C are positive integers;
the first quantization dictionary comprises a dictionary usage manner and respective dictionary content of the M sub-dictionaries, the dictionary usage manner indicates a correspondence between the M sub-dictionaries and the R quantization parts, a first sub-dictionary in the M sub-dictionaries corresponds to a first quantization part in the R quantization parts, and the first sub-dictionary is used to quantize the first quantization part, or the first sub-dictionary is used to dequantize information obtained by quantizing the first quantization part, dictionary content of each sub-dictionary in the M sub-dictionaries comprises at least one dictionary element, and each dictionary element comprised in the first sub-dictionary in the M sub-dictionaries is a candidate of quantization information of the first quantization part; and
the second quantization dictionary comprises a dictionary usage manner and respective dictionary content of the C sub-dictionaries, the dictionary usage manner indicates a correspondence between the C sub-dictionaries and the S quantization parts, a first sub-dictionary in the C sub-dictionaries corresponds to a first quantization part in the S quantization parts, and the first sub-dictionary is used to quantize the first quantization part, or the first sub-dictionary is used to dequantize information obtained by quantizing the first quantization part, dictionary content of each sub-dictionary in the C sub-dictionaries comprises at least one dictionary element, and each dictionary element comprised in the first sub-dictionary in the C sub-dictionaries is a candidate of quantization information of the first quantization part.

32. A communication apparatus, configured to implement the method according to any one of claims 1 to 31.

33. A communication apparatus, comprising at least one processor, wherein the at least one processor is coupled to at least one memory, and the at least one processor is configured to execute a computer program or instructions stored in the at least one memory, to enable the communication apparatus to perform the method according to any one of claims 1 to 31.

34. A quantization or dequantization apparatus, comprising a processor and a communication interface, wherein the communication interface is configured to receive data and/or information, and transmit the received data and/or information to the processor, the processor processes the data and/or information, and the communication interface is further configured to output the data and/or the information processed by the processor, to enable the apparatus to perform the method according to any one of claims 1 to 31.

35. A computer-readable storage medium, wherein the computer-readable storage medium stores computer instructions, and when the computer instructions are run on a computer, the method according to any one of claims 1 to 31 is implemented.

36. A computer program product, wherein the computer program product comprises computer program code, and when the computer program code runs on a computer, the method according to any one of claims 1 to 31 is performed.

37. A wireless communication system, comprising the communication apparatus according to claim 32 or 33, or the apparatus according to claim 34.
